# EUROPEAN PATENT APPLICATION

(11) **EP 3 734 594 A1**
(43) Date of publication of application: **04.11.2020**
(21) Application number: 18893921.9
(22) Date of filing: 23.10.2018
(51) Int. Cl.: G10K 15/02, G06F 13/00, G10L 19/00, H04H 60/07

(54) **INFORMATION PROCESSING DEVICE, INFORMATION PROCESSING METHOD AND PROGRAM**

(30) Priority: 28.12.2017 JP 2017253805
(71) Applicant: Sony Corporation, 108-0075 Tokyo (JP)
(72) Inventor: KATSUMATA, Mitsuru, Tokyo 108-0075 (JP); HIRABAYASHI, Mitsuhiro, Tokyo 108-0075 (JP); HAMADA, Toshiya, Tokyo 108-0075 (JP)
(74) Representative: D Young & Co LLP
(86) International application number: PCT/JP2018/039286
(87) International publication number: WO 2019/130763

(57) **Abstract**

It is enabled to set a priority for each of object audio data acquired.

An information processing device is provided including a processing unit that sets a priority for each of object audio data acquired, determines the object audio data to be included in a segment file generated, from one or more pieces of the object audio data on the basis of the priority, and generates a new priority to be set for the segment file generated, as priority information, on the basis of the priority.

## Description

### TECHNICAL FIELD

The present disclosure relates to an information processing device, an information processing method, and a program.

### BACKGROUND ART

In recent years, the mainstream of streaming services on the Internet has been an Over The Top Video (OTT-V). Moving Picture Experts Group phase-Dynamic Adaptive Streaming over HTTP (MPEG-DASH) has begun to spread as a basic technology of the OTT-V (for example, see Non-Patent Document 1).

In audio content distribution performed by using the MPEG-DASH, a distribution server prepares audio data for each object (the data is referred to as "object audio data"), and a client requests an optimal object audio data group depending on a situation of the transmission path and the like, whereby an adaptive streaming distribution is implemented.

### CITATION LIST

### NON-PATENT DOCUMENT

Non-Patent Document 1: MPEG-DASH (Dynamic Adaptive Streaming over HTTP) (URL: http://standards.iso.org/ittf/PubliclyAvailableStandards/ index.html)

### SUMMARY OF THE INVENTION

### PROBLEMS TO BE SOLVED BY THE INVENTION

However, in the MPEG-DASH standard described in Non-Patent Document 1, it has not been possible to set a priority in units of object audio data. Therefore, there has been a problem that the client has to acquire an audio file once, in other words, acquire an entire file including data that should be unnecessary originally, and then parse object audio metadata of the audio file, and the bandwidth cannot be used effectively, and also the client has processing overhead.

Thus, the present disclosure has been made in view of the problems described above, and an object of the present disclosure is to provide a new and improved information processing device, information processing method, and program capable of setting a priority for each of object audio data acquired.

### SOLUTIONS TO PROBLEMS

According to the present disclosure, an information processing device is provided including a processing unit that sets a priority for each of object audio data acquired, determines the object audio data to be included in a segment file generated, from one or more pieces of the object audio data on the basis of the priority, and generates a new priority to be set for the segment file generated, as priority information, on the basis of the priority.

Furthermore, according to the present disclosure, an information processing method executed by a computer is provided, including performing information processing on stream data whose priority has been set for each of object audio data acquired.

Furthermore, according to the present disclosure, a program is provided for causing a computer to implement information processing on stream data whose priority has been set for each of object audio data acquired.

### EFFECTS OF THE INVENTION

As described above, according to the present disclosure, it is possible to set a priority for each of object audio data acquired.

Note that, the above-described effect is not necessarily limited, and any of effects described in the present specification or other effects that can be grasped from the present specification may be exhibited in addition to or in place of the above-described effect.

### BRIEF DESCRIPTION OF DRAWINGS

Fig. 1 is a diagram illustrating the background of the present disclosure.
Fig. 2 is a diagram illustrating the background of the present disclosure.
Fig. 3 is a diagram illustrating the background of the present disclosure.
Fig. 4 is a diagram illustrating the background of the present disclosure.
Fig. 5 is a diagram illustrating the background of the present disclosure.
Fig. 6 is a diagram illustrating a system configuration example of an information processing system according to the present embodiment.
Fig. 7 is a block diagram illustrating a functional configuration example of a server 100 according to the present embodiment.
Fig. 8 is a block diagram illustrating a functional configuration example of a client 200 according to the present embodiment.
Fig. 9 is a diagram illustrating an example of audio file generation based on priority.
Fig. 10 is a diagram illustrating an example of audio file generation based on the priority.
Fig. 11 is a diagram illustrating an example of audio file generation based on the priority.
Fig. 12 is a diagram illustrating an example of audio file generation based on the priority.
Fig. 13 is a diagram illustrating a priority information signaling example in a case where the priority does not change over time.
Fig. 14 is a diagram illustrating a file configuration in a case where the priority changes over time.
Fig. 15 is a diagram illustrating the ISOBMFF of an audio file in MPEG-H 3D Audio.
Fig. 16 is a diagram for explaining a Box structure of the ISOBMFF.
Fig. 17 is a diagram illustrating the ISOBMFF (Example 1, RAW method) of a metadata file in MPEG-H 3D Audio.
Fig. 18 is a diagram illustrating the ISOBMFF (Example 1, MHAS method) of the metadata file in MPEG-H 3D Audio.
Fig. 19 is a diagram illustrating the ISOBMFF (Example 2, RAW method) of the metadata file in MPEG-H 3D Audio.
Fig. 20 is a diagram illustrating the ISOBMFF (Example 2, MHAS method) of the metadata file in MPEG-H 3D Audio.
Fig. 21 is a diagram illustrating the ISOBMFF of an audio file in AAC 3D Audio.
Fig. 22 is a diagram illustrating the ISOBMFF (Example 3) of a metadata file in AAC 3D Audio.
Fig. 23 is a diagram illustrating the ISOBMFF (Example 4) of the metadata file in AAC 3D Audio.
Fig. 24 is a diagram for explaining an example of association between audio files and a metadata file.
Fig. 25 is a diagram illustrating an example (Example 1) of the association between the audio files and the metadata file.
Fig. 26 is a diagram illustrating an example (Example 2) of the association between the audio files and the metadata file.
Fig. 27 is a diagram illustrating an example (Example 3) of the association between the audio files and the metadata file.
Fig. 28 is a diagram illustrating an example (Example 4) of the association between the audio files and the metadata file.
Fig. 29 is a diagram illustrating an example (Example 5) of the association between the audio files and the metadata file.
Fig. 30 is a diagram illustrating a signaling example (Example 1) in a case where a bit rate does not change over time.
Fig. 31 is a diagram illustrating a signaling example (Example 2) in the case where the bit rate does not change over time.
Fig. 32 is a diagram illustrating a signaling example (Example 3) in the case where the bit rate does not change over time.
Fig. 33 is a diagram illustrating a signaling example (Example 4) in the case where the bit rate does not change over time.
Fig. 34 is a diagram for explaining a signaling example in a case where the bit rate changes over time.
Fig. 35 is a diagram illustrating a signaling example (Example 5) in the case where the bit rate changes over time.
Fig. 36 is a diagram illustrating a signaling example (Example 6) in the case where the bit rate changes over time.
Fig. 37 is a diagram illustrating a signaling example (Example 7) in the case where the bit rate changes over time.
Fig. 38 is a diagram illustrating a signaling example (Example 8) in the case where the bit rate changes over time.
Fig. 39 is a diagram illustrating a description information signaling example.
Fig. 40 is a flowchart illustrating a processing example until the client 200 acquires an audio file used for reproducing audio content in the case where the priority does not change over time.
Fig. 41 is a diagram for explaining the processing example until the client 200 acquires an audio file used for reproducing audio content in the case where the priority does not change over time.
Fig. 42 is a flowchart illustrating a processing example until the client 200 acquires the audio file used for reproducing the audio content in the case where the priority changes over time.
Fig. 43 is a diagram for explaining the processing example until the client 200 acquires the audio file used for reproducing the audio content in the case where the priority changes over time.
Fig. 44 is a block diagram illustrating a hardware configuration example of an information processing device 900 that embodies the server 100 or the client 200.
Fig. 45 is a diagram illustrating a structure of 3da_meta_data().
Fig. 46 is a diagram illustrating a structure of 3da_meta_data() stored in a DSE.
Fig. 47 is a diagram illustrating a structure of the DSE.
Fig. 48 is a diagram illustrating a structure of 3da_ancillary_data stored in data_stream_byte in the DSE.

### MODE FOR CARRYING OUT THE INVENTION

Preferred embodiments of the present disclosure will be described in detail below with reference to the accompanying drawings. Note that, in the present specification and the drawings, components having substantially the same functional configuration are denoted by the same reference signs, and redundant explanations will be omitted.

Note that, the description will be made in the following order.
1. Background
2. Configuration example
3. Example of file generation based on priority
4. Priority information signaling example
5. Bit rate information signaling example
6. Description information signaling example
7. Processing example of client 200
8. Hardware configuration example

### <1. Background>

First, the background of the present disclosure will be described.

MPEG-H 3D Audio and AAC 3D Audio are standards that can handle object audio data that is audio data generated for each object. Audio content includes a plurality of pieces of object audio data that is waveform data of a sound source, and object metadata including information regarding a position of an object, a spread of a sound, various effects, or the like.

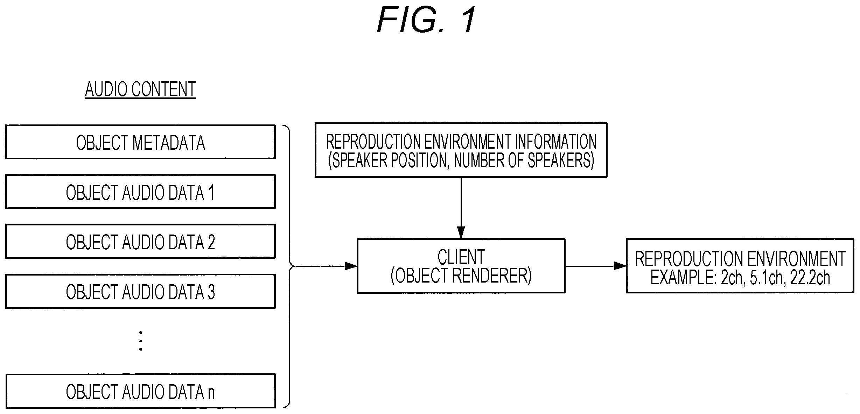

For example, as illustrated in Fig. 1, object metadata and a plurality of pieces of object audio data (in Fig. 1, object audio data 1 to object audio data n are illustrated) are provided to a client by a server or the like. Upon receiving the object metadata and the object audio data, the client that functions as an object renderer performs rendering on the basis of reproduction environment information (for example, positions or the number of speakers, and the like), and provides waveform data to the reproduction environment such as speakers, thereby implementing reproduction of audio content.

Here, in MPEG-H 3D Audio and AAC 3D Audio, it is not always necessary that all object audio data are rendered. For this, methods can be considered, for example, in which the server does not provide the client with object audio data itself that is not to be rendered, or excludes the object audio data that is not to be rendered from the object metadata.

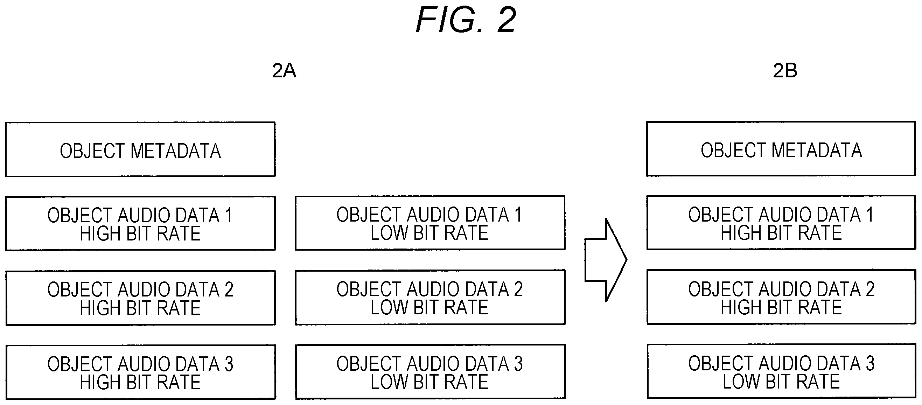

Furthermore, in these standards, a plurality of pieces of object audio data may be reproduced at bit rates different from each other. For example, as illustrated in 2A of Fig. 2, it is assumed that audio content includes object metadata and the object audio data 1 to the object audio data 3 for which high bit rate data and low bit rate data are respectively prepared. In this case, the bit rates of the object audio data to be reproduced can be freely combined. For example, as illustrated in 2B, the object audio data 1 and the object audio data 2 may be reproduced at a high bit rate, and the object audio data 3 may be reproduced at a low bit rate.

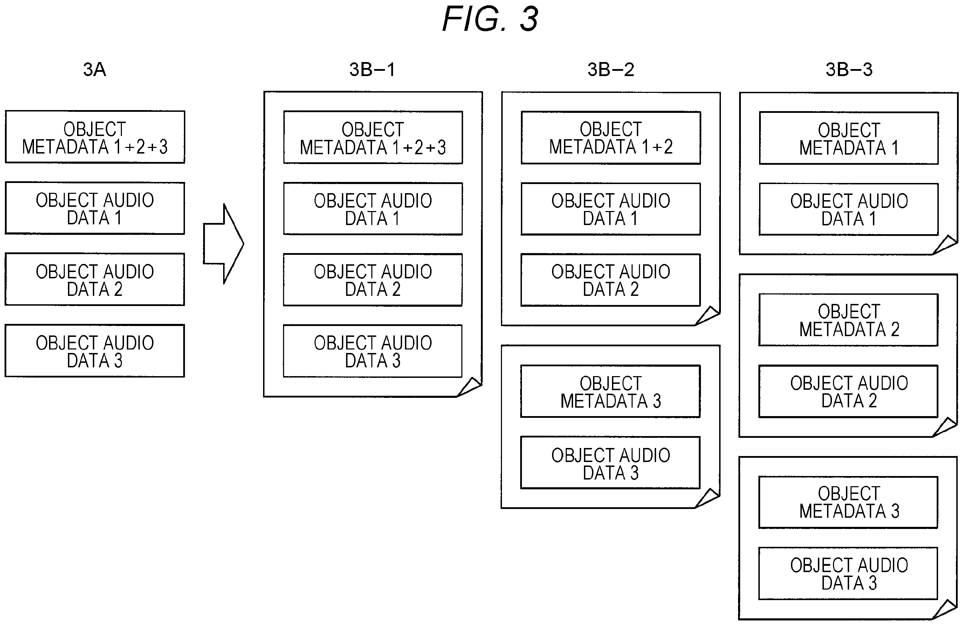

In a case where audio content is provided, the object audio data is stored in an audio file and transmitted to the client. Here, a specific example will be described with reference to Fig. 3. As illustrated in 3A of Fig. 3, in a case where there are the object audio data 1 to the object audio data 3 and object metadata corresponding to these data, a plurality of combinations can be considered as the mode of storing them in the audio file as illustrated in 3B-1 to 3B-3.

More specifically, as illustrated in 3B-1, all data may be stored in one audio file, or as illustrated in 3B-3, one of the object audio data and the object metadata corresponding thereto may be stored in one audio file. Furthermore, as illustrated in 3B-2, one or more pieces of the object audio data and the object metadata corresponding thereto may be respectively stored in the audio file.

By the way, in a case where audio content is provided in MPEG-DASH, audio files having different bit rates from each other are generated, and the client can select a desired audio file from these audio files.

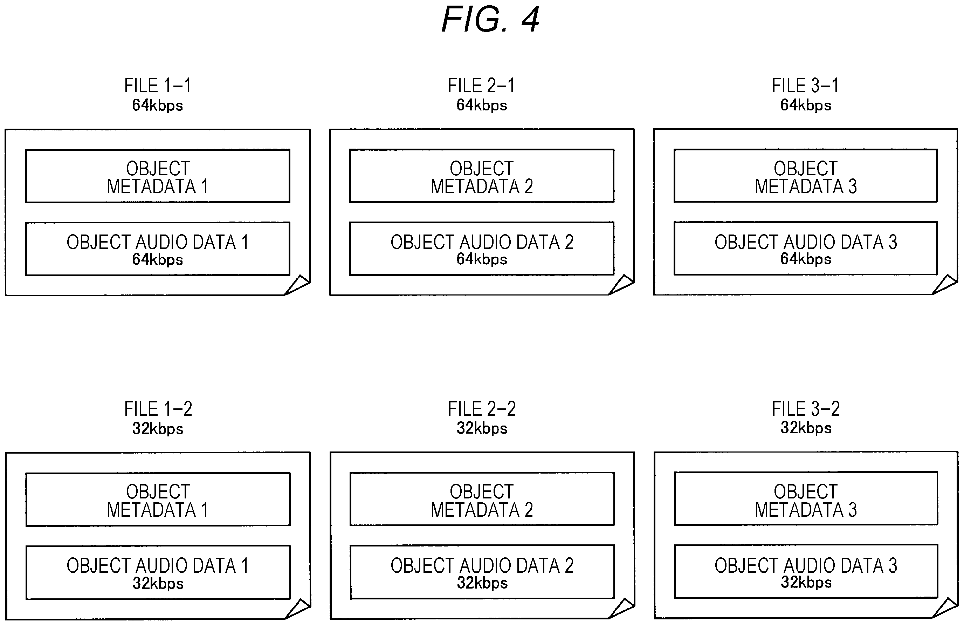

For example, it is assumed that the object audio data 1 to the object audio data 3 having bit rates of 64 [kbps] and 32 [kbps] are respectively generated as illustrated in Fig. 4. In this case, there are 2³ combinations of audio files that can be acquired by the client. There are combinations having the same total bit rate, for example, a combination of a file 1-1, a file 2-1, and a file 3-2 (160 [kbps] in total]) and a combination of the file 1-1, a file 2-2, and a file 3-1 (160 [kbps] in total).

However, the client cannot determine which combination is more appropriate by only information regarding the total bit rate. Thus, it may be considered to set a priority as information indicating which object audio data should be reproduced with higher sound quality (in other words, higher bit rate) so that the client can determine a more appropriate combination.

As one of the object metadata that can be used as priority information, "Priority" in MPEG-H 3D Audio and the like can be mentioned. However, Priority is data stored in the object metadata, and thus, in a case where Priority is applied to MPEG-DASH, the client acquires the audio file once, and acquires Priority from the object metadata, thereby determining the bit rate of the audio file. In other words, the client has to acquire unnecessary data.

Thus, in view of the above circumstances, the discloser of the present disclosure has created a technology according to the present disclosure. The present disclosure enables setting of a priority for each of object audio data acquired, and efficient acquisition, and can implement distribution and reproduction of appropriate audio content on the basis of the priority.

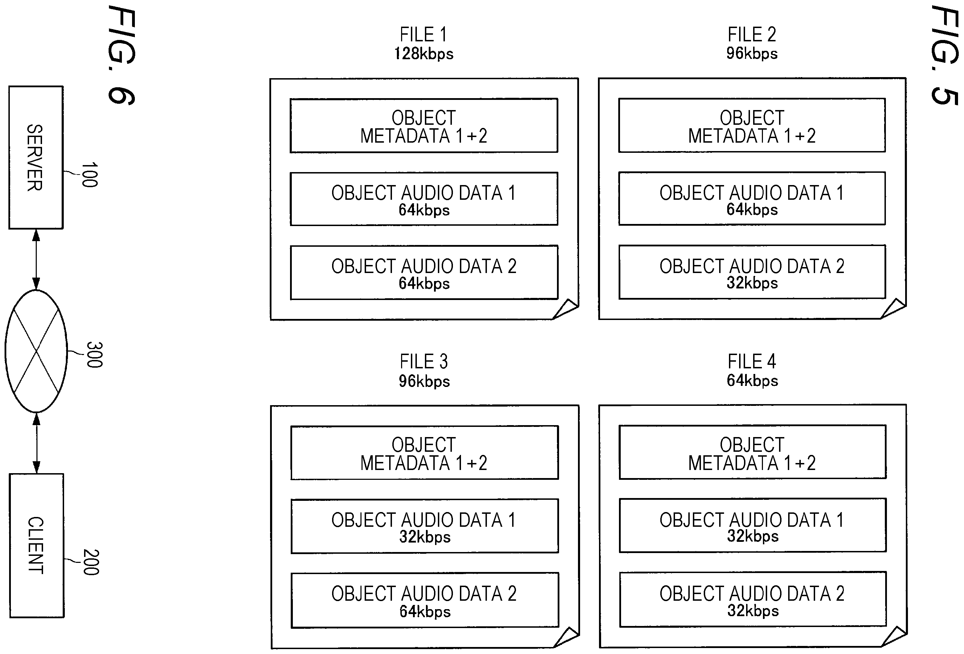

Furthermore, in MPEG-DASH, the client determines an audio file to be acquired basically on the basis of the bit rate of the audio file. Therefore, in a situation where there is no priority information described above, for example, in a case where four types of audio files are generated by combining the bit rates of the object audio data 1 and the object audio data 2 as illustrated in Fig. 5, since the bit rates of a file 2 and a file 3 are both 96 [kbps], the client cannot determine which audio file is more appropriate by only the information regarding the bit rate, and furthermore, a content provider cannot provide a combination of intended object audio data and its bit rate to the client.

On the other hand, the present disclosure can provide the client with bit rate information in units of object audio data stored in the audio file. As a result, the client can determine which audio file, the file 2 or the file 3, is more appropriate, by also considering the priority information described above.

Furthermore, the present disclosure can provide the client with Description information of the object audio data. As a result, a user operating the client can cause desired object audio data to be reproduced at a high bit rate.

Hereinafter, one embodiment of the present disclosure will be described in more detail.

### <2. Configuration example>

In the above description, the background has been described of the present disclosure. Subsequently, with reference to Figs. 6 to 8, a configuration example will be described of an information processing system according to the embodiment of the present disclosure.

### (2-1. System configuration example)

First, with reference to Fig. 6, a system configuration example will be described of the information processing system according to the present embodiment.

As illustrated in Fig. 6, the information processing system according to the present embodiment includes a server 100 and a client 200. Then, the server 100 and the client 200 are connected to each other via the Internet 300.

The server 100 is an information processing device (transmission device) that distributes (streams) object audio data used for audio content to the client 200 on the basis of MPEG-DASH. More specifically, the server 100 acquires audio data used for the audio content for each object, and generates stream data by encoding the data in units of the object. Then, the server 100 generates an audio file by converting the stream data into a file for each unit of time of about several seconds to 10 seconds called a segment, or for all contents.

Note that, the object is a sound source, and the audio data of each object is acquired by a microphone or the like attached to the object. The object may be a fixed object such as a microphone stand, or a moving object such as a person.

Furthermore, the server 100 encodes object metadata including position information and the like of each object. The server 100 generates a metadata file by converting coded data of the object metadata into a file in units of the segment.

Moreover, the server 100 generates a Media Presentation Description (MPD) file (control information) for managing the audio file.

Then, the server 100 transmits the above-described audio file, metadata file, MPD file, or the like to the client 200 in response to a request from the client 200.

The client 200 is an information processing device (reception device) that reproduces audio content. More specifically, the client 200 acquires the MPD file from the server 100, and acquires the metadata file and the audio file from the server 100 on the basis of the MPD file. Then, the client 200 decodes, synthesizes, and outputs the audio file acquired from the server 100, thereby implementing the reproduction of the audio content.

In the above, the configuration example has been described of the information processing system according to the present embodiment. Note that, the configuration described above with reference to Fig. 6 is merely an example, and the configuration of the information processing system according to the present embodiment is not limited to such an example. For example, some functions of the server 100 may be provided in the client 200 or another external device. For example, software that provides some functions of the server 100 (for example, a WEB application using a predetermined Application Programming Interface (API), or the like) may be executed on the client 200. Furthermore, conversely, some functions of the client 200 may be provided in the server 100 or another external device. The configuration of the information processing system according to the present embodiment can be flexibly modified depending on specifications and operations.

### (2-2. Functional configuration example of server 100)

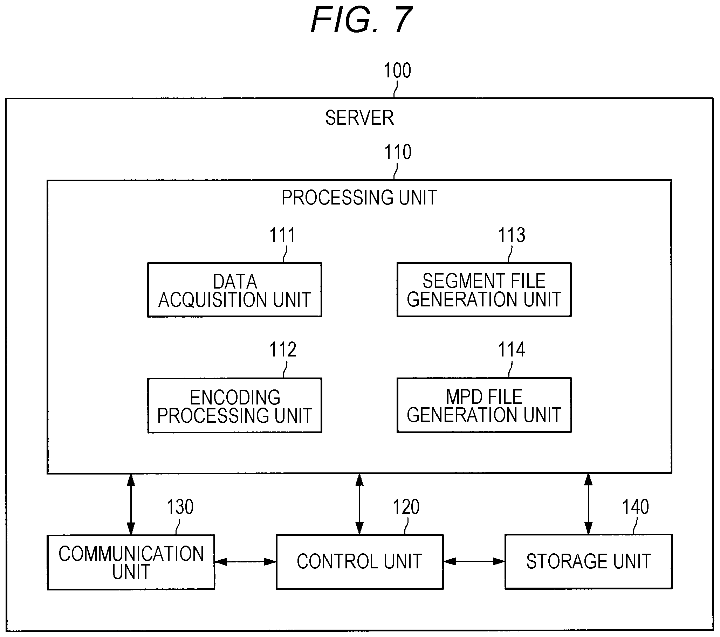

In the above description, the system configuration example has been described of the information processing system according to the present embodiment. Subsequently, with reference to Fig. 7, a functional configuration example of the server 100 will be described.

As illustrated in Fig. 7, the server 100 includes a processing unit 110, a control unit 120, a communication unit 130, and a storage unit 140.

The processing unit 110 has a functional configuration for performing processing related to provision of audio content. As illustrated in Fig. 7, the processing unit 110 includes a data acquisition unit 111, an encoding processing unit 112, a segment file generation unit 113, and an MPD file generation unit 114.

The data acquisition unit 111 has a functional configuration for acquiring audio data used for audio content for each object (in other words, acquiring object audio data). The data acquisition unit 111 may acquire the object audio data from within the server 100, or may acquire the object audio data from an external device connected to the server 100. Furthermore, the data acquisition unit 111 may set a priority for each object audio data get, or may acquire object audio data for which a priority is set in advance. The data acquisition unit 111 provides the object audio data acquired to the encoding processing unit 112.

The encoding processing unit 112 has a functional configuration for generating stream data by encoding the object audio data provided from the data acquisition unit 111 for each object. Furthermore, the encoding processing unit 112 encodes object metadata including object position information and the like of each object input from the outside. The encoding processing unit 112 provides the stream data of each object and coded data of the object metadata to the segment file generation unit 113.

The segment file generation unit 113 has a functional configuration for generating a segment file that is data in a unit that can be distributed as audio content. More specifically, the segment file generation unit 113 generates an audio file by converting the stream data of each object provided from the encoding processing unit 112 into a file in units of the segment. There are various modes for generation of an audio file. For example, the segment file generation unit 113 generates an audio file by storing one or more object audio data in one audio file on the basis of the priority of each object audio data. Moreover, the segment file generation unit 113 can also set priority information for each file. Details of the generation of the audio file based on the priority will be described later.

Furthermore, the segment file generation unit 113 can also generate a metadata file that stores only the object metadata by converting the coded data, which is provided from the encoding processing unit 112, of the object metadata, into a file in units of the segment. Contents of the metadata file and a case where the metadata file is generated will be described later.

The MPD file generation unit 114 has a functional configuration for generating an MPD file. In the present embodiment, the MPD file generation unit 114 generates an MPD file including priority information, bit rate information, or description information. Details of contents of the MPD file will be described later.

The control unit 120 has a functional configuration for comprehensively controlling entire processing performed by the server 100. For example, the control unit 120 can control the start and stop of each component on the basis of request information or the like from the client 200 received via the communication unit 130. Note that, the control content of the control unit 120 is not particularly limited. For example, the control unit 120 may control processing generally performed in a general-purpose computer, a PC, a tablet PC, or the like.

The communication unit 130 has a functional configuration for performing various types of communication with the client 200 (also functions as a transmission unit). For example, the communication unit 130 receives request information from the client 200 and transmits an MPD file, a metadata file, an audio file, or the like to the client 200 as a response to the request information. Note that, the communication content of the communication unit 130 is not limited to these.

The storage unit 140 has a functional configuration for storing various types of information. For example, the storage unit 140 stores object audio data, audio files, object metadata, metadata files, MPD files, or the like, and stores programs, parameters, or the like used by each functional configuration of the server 100. Note that, the information stored in the storage unit 140 is not limited to these.

In the above, the functional configuration example of the server 100 has been described. Note that, the above functional configuration described with reference to Fig. 7 is merely an example, and the functional configuration of the server 100 is not limited to such an example. For example, the server 100 does not necessarily have to include all of the functional configurations illustrated in Fig. 7. Furthermore, the functional configuration of the server 100 can be flexibly modified depending on specifications and operations.

### (2-3. Functional configuration example of client 200)

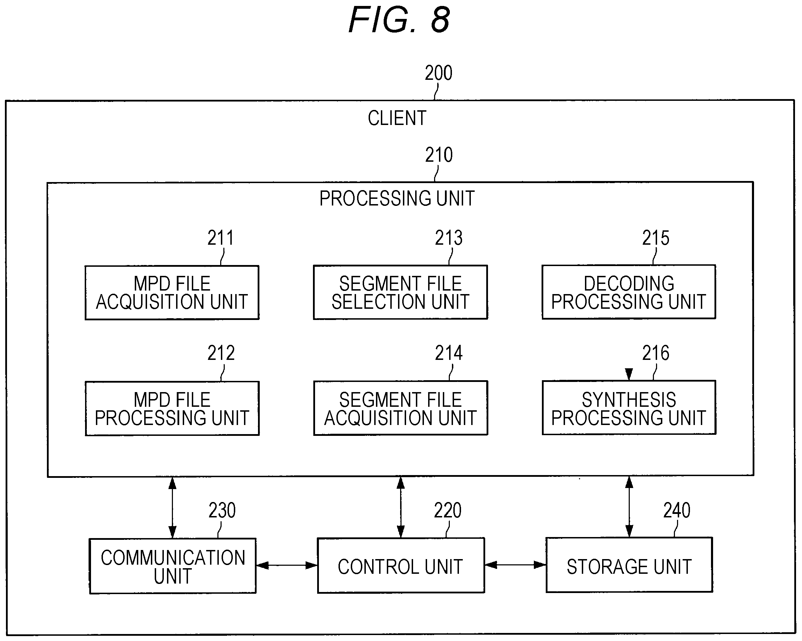

In the above description, the functional configuration example of the server 100 has been described. Subsequently, with reference to Fig. 8, a functional configuration example of the client 200 will be described.

As illustrated in Fig. 8, the client 200 includes a processing unit 210, a control unit 220, a communication unit 230, and a storage unit 240.

The processing unit 210 has a functional configuration for performing processing related to reproduction of audio content. As illustrated in Fig. 8, the processing unit 210 includes an MPD file acquisition unit 211, an MPD file processing unit 212, a segment file selection unit 213, a segment file acquisition unit 214, a decoding processing unit 215, and a synthesis processing unit 216.

The MPD file acquisition unit 211 has a functional configuration for acquiring an MPD file from the server 100 before reproducing audio content. More specifically, the MPD file acquisition unit 211 generates request information for the MPD file on the basis of a user operation or the like, and provides the request information to the server 100 via the communication unit 230, thereby acquiring the MPD file from the server 100. The MPD file acquisition unit 211 provides the MPD file acquired to the MPD file processing unit 212.

The MPD file processing unit 212 has a functional configuration for performing processing related to the MPD file provided from the MPD file acquisition unit 211. More specifically, the MPD file processing unit 212 analyzes the MPD file to recognize information (for example, URL or the like) necessary for acquiring an audio file or a corresponding metadata file thereto, or to recognize a priority, bit rate, or the like of each object audio data (or audio file). The MPD file processing unit 212 provides these pieces of information to the segment file selection unit 213.

The segment file selection unit 213 has a functional configuration for selecting a segment file to be acquired. More specifically, the segment file selection unit 213 selects an audio file or a metadata file to be acquired on the basis of the above-described various types of information provided from the MPD file processing unit 212. For example, the segment file selection unit 213 selects the audio file to be acquired so that an audio file having a higher priority has a higher bit rate. At that time, the segment file selection unit 213 also considers an available transmission band and selects, for example, an audio file having the highest bit rate in the available transmission band.

Note that, the method of selecting a file to be acquired is not limited to the above. For example, the segment file selection unit 213 may select an audio file desired by the user as an acquisition target on the basis of an input from the user. The segment file selection unit 213 provides information regarding the file to be acquired to the segment file acquisition unit 214.

The segment file acquisition unit 214 has a functional configuration for acquiring a segment file. More specifically, the segment file acquisition unit 214 generates request information for an audio file or a metadata file on the basis of various types of information provided from the segment file selection unit 213, and provides the request information to the server 100 via the communication unit 230, thereby acquiring these files from the server 100. The segment file acquisition unit 214 provides these files acquired to the decoding processing unit 215.

The decoding processing unit 215 has a functional configuration for decoding data included in the audio file or the metadata file provided from the segment file acquisition unit 214. The decoding processing unit 215 provides the object audio data and the like obtained by the decoding processing to the synthesis processing unit 216.

The synthesis processing unit 216 has a functional configuration for synthesizing and outputting a plurality of pieces of object audio data provided from the decoding processing unit 215. The synthesis processing unit 216 provides synthesized data to the control unit 220.

The control unit 220 has a functional configuration for comprehensively controlling entire processing performed by the client 200. For example, the control unit 220 controls an output unit (not illustrated) such as a display or a speaker, and outputs the synthesized data provided by the synthesis processing unit 216, thereby providing audio content to the user. Furthermore, the control unit 220 controls various types of processing on the basis of an input performed by the user using an input unit (not illustrated) such as a mouse and a keyboard. Note that, the control content of the control unit 220 is not particularly limited. For example, the control unit 220 may control processing generally performed in a general-purpose computer, a PC, a tablet PC, or the like.

The communication unit 230 has a functional configuration for performing various types of communication with the server 100 (also functions as a reception unit). For example, the communication unit 230 transmits request information to the server 100 on the basis of a user input or the like, or receives an MPD file, a metadata file, an audio file, or the like from the server 100 as a response to the request information. Note that, the communication content of the communication unit 230 is not limited to these.

The storage unit 240 has a functional configuration for storing various types of information. For example, the storage unit 240 stores object audio data, audio files, object metadata, metadata files, MPD files, or the like provided from the server 100, and stores programs, parameters, or the like used by each functional configuration of the client 200. Note that, the information stored in the storage unit 240 is not limited to these.

In the above, the functional configuration example of the client 200 has been described. Note that, the above functional configuration described with reference to Fig. 8 is merely an example, and the functional configuration of the client 200 is not limited to such an example. For example, the client 200 does not necessarily have to include all of the functional configurations illustrated in Fig. 8. Furthermore, the functional configuration of the client 200 can be flexibly modified depending on specifications and operations.

### <3. Example of audio file generation based on priority>

In the above description, the functional configuration example of the client 200 has been described. Subsequently, an example of audio file generation based on the priority will be described.

As described above, the segment file generation unit 113 of the server 100 generates an audio file by combining one or more object audio data and storing them in one audio file by using priority information for each object audio data. Moreover, the segment file generation unit 113 can also set priority information for each file.

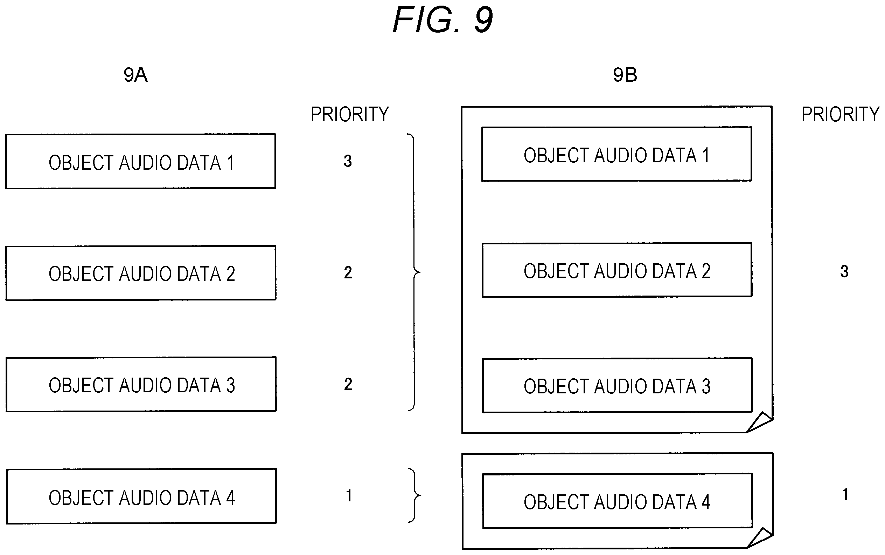

Here, with reference to Figs. 9 to 12, the example of audio file generation based on the priority will be described. For example, as illustrated in 9A of Fig. 9, it is assumed that there are the object audio data 1 to the object audio data 4, and priorities are set in advance for these data. More specifically, the priority of the object audio data 1 is 3, the priorities of the object audio data 2 and the object audio data 3 are 2, and the priority of the object audio data 4 is 1 (note that, the higher the value, the higher the priority).

In this case, the segment file generation unit 113 may combine object audio data having closer priorities (a priority difference is less than or equal to a predetermined value) and store them in one audio file. For example, as illustrated in 9B, the segment file generation unit 113 may combine the object audio data 1, which is the first data in a series of data, with the object audio data 2 and the object audio data 3 each having the priority 2 that is closer to the priority 3 of the object audio data 1 (for example, the priority difference is less than or equal to 1), and store them in one audio file. Then, the segment file generation unit 113 may store the remaining object audio data 4 in another audio file.

Then, the segment file generation unit 113 may set the highest priority among the priorities of the object audio data stored in one audio file as a priority of the one audio file. For example, as illustrated in 9B, the segment file generation unit 113 may set the highest priority 3 among the priorities of the object audio data 1 to the object audio data 3 as a priority of the audio file in which these data are stored. Note that, the method of setting the priority of the audio file is not limited to this. For example, the segment file generation unit 113 may set the priority with the largest number of data having the same priority among the priorities of the object audio data stored in one audio file, as a priority of the audio file. Furthermore, the segment file generation unit 113 may set an average value of the priorities of the object audio data stored in one audio file, as a priority of the audio file.

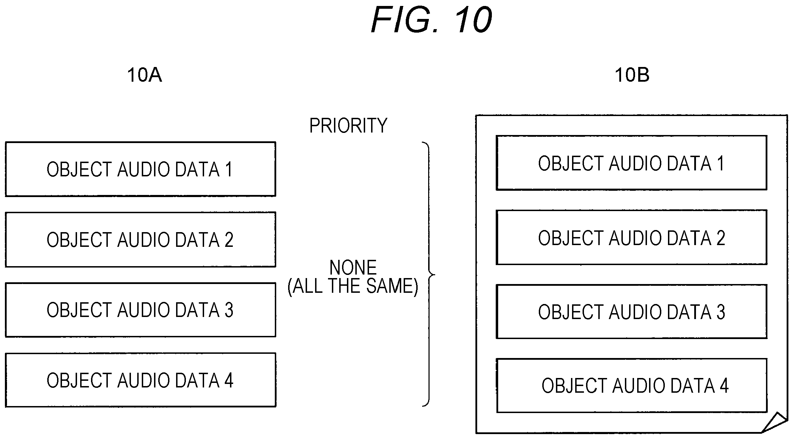

Furthermore, in a case where no priority is set for the object audio data 1 to the object audio data 4 or in a case where all priorities are the same as illustrated in 10A of Fig. 10, the segment file generation unit 113 may store all the object audio data in the same audio file as illustrated in 10B. Then, the segment file generation unit 113 does not have to set the priority of the audio file, or may set the same priority set for each object audio data as a priority of the audio file.

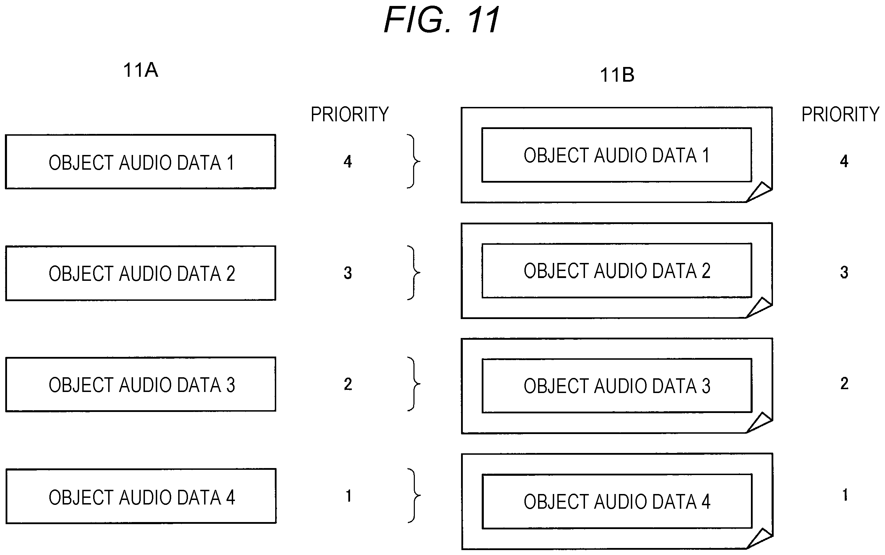

Furthermore, in a case where the priorities of the object audio data 1 to the object audio data 4 are different from each other as illustrated in 11A of Fig. 11, the segment file generation unit 113 may store the object audio data respectively in different audio files as illustrated in 11B. Then, the segment file generation unit 113 may set the same value as the priority of each object audio data as a priority of each audio file.

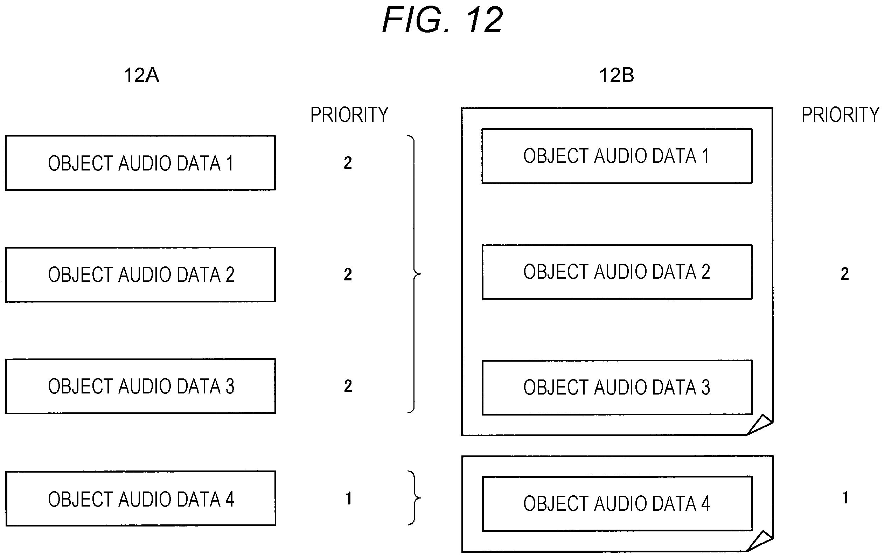

Furthermore, it is assumed that the priorities of the object audio data 1 to the object audio data 3 are 2 and the priority of the object audio data 4 is 1 as illustrated in 12A of Fig. 12. In this case, as illustrated in 12B, the segment file generation unit 113 may store the object audio data 1 to the object audio data 3 having the same priority in one audio file, and store the object audio data 4 having a different priority in another audio file. Also in 12B, the same value as the priority of each object audio data is set as a priority of each audio file.

Here, in MPEG-DASH, the client 200 performs acquisition control in units of the audio file. Therefore, as illustrated in 9B of Fig. 9, 10B of Fig. 10, and 12B of Fig. 12, the segment file generation unit 113 stores a plurality of pieces of object audio data in one audio file, whereby a content creator can control the combination of the object audio data and its bit rate. In other words, the content creator can provide audio content with the combination of the intended object audio data and the bit rate. On the other hand, for the user, a degree of freedom of acquisition of the object audio data is decreased.

On the other hand, in a case where one of the object audio data is stored in one audio file as illustrated in 11B of Fig. 11, the user can acquire only desired object audio data, so that the degree of freedom is increased of acquisition of the object audio data. On the other hand, it becomes difficult for the content creator to prevent audio content from being reproduced with an unintended combination of the object audio data and the bit rate. By the above, the content creator can adjust the degree of freedom of acquisition of the object audio data by the user, depending on the mode of storage of the object audio data in the audio file.

Note that, the method of generating the audio file based on the priority or the method of setting the priority of the audio file is not limited to the above, and may be changed as appropriate.

### <4. Priority information signaling example>

In the above description, the example of audio file generation based on the priority has been described. Subsequently, a priority information signaling example will be described.

### (4-1. Signaling example in case where priority does not change over time)

First, a signaling example will be described in a case where the priority does not change over time.

The priorities of audio files with different bit rates storing the same object audio data are the same as each other. Therefore, signaling by AdaptationSet of the MPD file is appropriate. More specifically, the present disclosure uses SupplementalProperty to newly define schemeIdUri indicating priority information, and the MPD file generation unit 114 of the server 100 stores the priority information in a value.

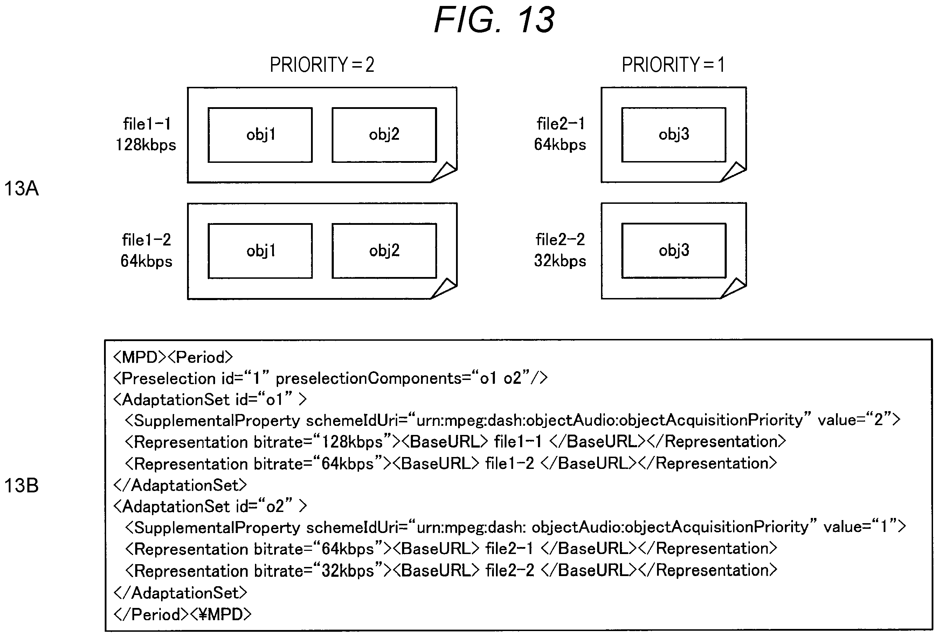

Here, with reference to Fig. 13, the priority information signaling example will be described. As illustrated in 13A of Fig. 13, a case is considered where there are bit rate variations of an audio file storing the object audio data 1 and the object audio data 2, and bit rate variations of an audio file storing the object audio data 3 (in the figure, the object audio data is described as "obj" for convenience). Then, it is assumed that the priority of the audio file storing the object audio data 1 and the object audio data 2 is 2, and the priority of the audio file storing the object audio data 3 is 1.

In this case, the MPD file generation unit 114 generates an MPD file as illustrated in 13B. More specifically, in preselectionComponents of Preselection, AdaptationSet is enumerated including object audio data to be reproduced simultaneously in audio content. The first AdaptationSet is AdaptationSet (AdaptationSet whose id is o1) of the audio file storing the object audio data 1 and the object audio data 2. The MPD file generation unit 114 sets SupplementalProperty indicating that the priority is 2 in the AdaptationSet.

The second AdaptationSet is AdaptationSet (AdaptationSet whose id is o2) of the audio file storing the object audio data 3. The MPD file generation unit 114 sets SupplementalProperty indicating that the priority is 1 in the AdaptationSet. As a result, the MPD file processing unit 212 of the client 200 can grasp the priority of each audio file on the basis of the MPD file.

Note that, the above is merely an example, and the signaling method is not limited to the above. For example, instead of that SupplementalProperty is used, objectAcquisitionPriority may be added as an Attribute of AdaptationSet. More specifically, the MPD file generation unit 114 of the server 100 may describe "<AdaptationSet id="o1" objectAcquisitionPriority ="2">" and "<AdaptationSet id="o2" objectAcquisitionPriority ="1">" in the MPD file without using SupplementalProperty.

### (4-2. Signaling example in case where priority changes over time)

In the above description, the signaling example has been described in the case where the priority does not change over time. Subsequently, a signaling example will be described in a case where the priority changes over time.

In the case where the priority changes over time, object metadata changes over time. Therefore, if description is made in a MovieBox area of the MPD or ISOBMFF file, it is not appropriate from a viewpoint of a server processing load and a client processing overhead increase. Thus, the segment file generation unit 113 of the server 100 generates a metadata file that stores only object metadata corresponding to each object audio data.

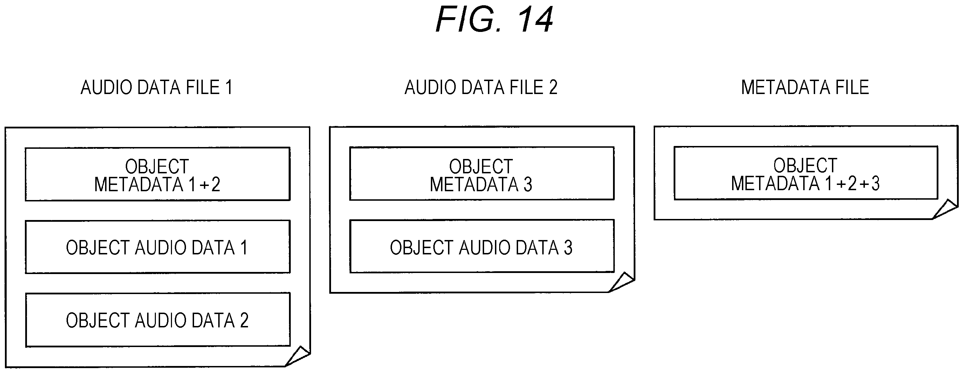

For example, as illustrated in Fig. 14, a case is considered where there are an audio file 1 storing the object audio data 1, object audio data 2, and corresponding object metadata 1+2, and an audio file 2 storing the object audio data 3 and corresponding object metadata 3. In this case, the segment file generation unit 113 generates a metadata file by converting object metadata 1+2+3 obtained by integrating the object metadata 1+2 and the object metadata 3 into a file. Note that, the metadata file is assumed to be a file that stores only object metadata, but is not limited to this, and the metadata file may store other data as appropriate.

Here, since the file size of the metadata file is smaller than the file size of the audio file in which the object audio data is stored, the client 200 acquires the metadata file before acquiring the audio file, thereby being able to appropriately perform audio file acquisition control on the basis of the priority information of the object metadata 1+2+3 stored in the file.

Since a method of storing the metadata file in the ISOBMFF and handling in MPEG-DASH are not defined, they are newly defined in the present disclosure. In the following, descriptions will be given of the ISO Base Media File Format (ISOBMFF) of metadata files in MPEG-H 3D Audio and AAC 3D Audio, and a method of association between object metadata stored in the metadata file and object audio data.

### (4-2-1. ISOBMFF of MPEG-H 3D Audio)

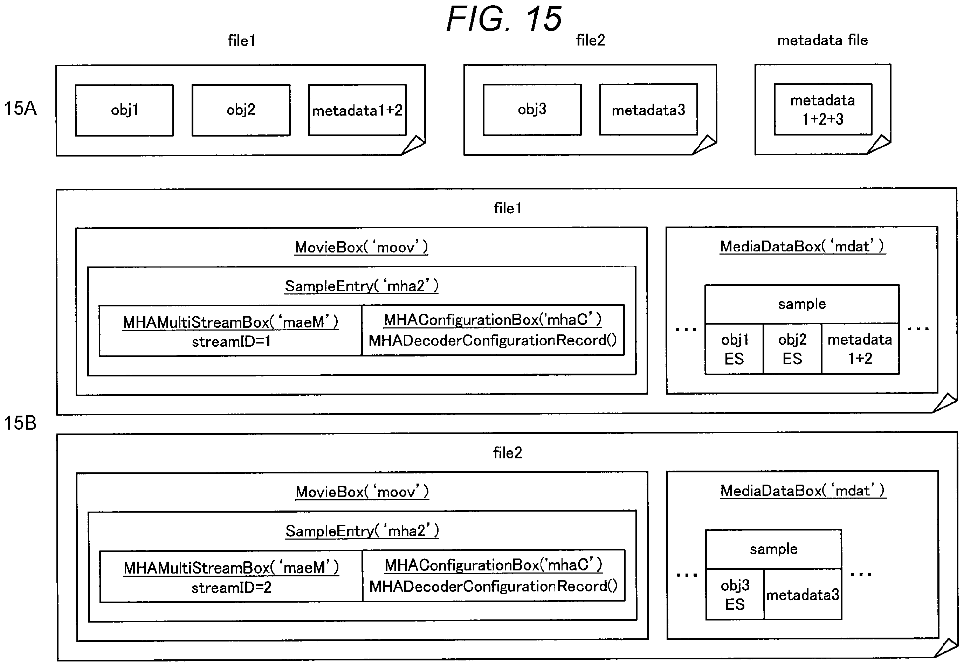

Before describing the ISOBMFF of the metadata file in MPEG-H 3D Audio, an existing file format will be described first. MPEG-H 3D Audio specifies a method of storing object audio data and object metadata in an audio file. For example, as illustrated in 15A of Fig. 15, a case is considered where there are the audio file 1 storing the object audio data 1, the object audio data 2, and the object metadata 1+2, and the audio file 2 storing the object audio data 3 and the object metadata 3.

In this case, the ISOBMFF of each of the audio file 1 and the audio file 2 is like 15B. More specifically, in each audio file, Configuration of the object included in the sample is described in MHADecoderConfigurationRecord of MHAConfigurationBox('mhaC') included in SampleEntry of MovieBox('moov'). Furthermore, in MHAMultiStreamBox('maeM') included in SampleEntry, streamID is described for uniquely identifying each audio file in a case where audio content is provided by a plurality of audio files. Each of the sample data included in MediaDataBox('mdat') includes object audio data (Elementary Stream (ES)) and object metadata for each time.

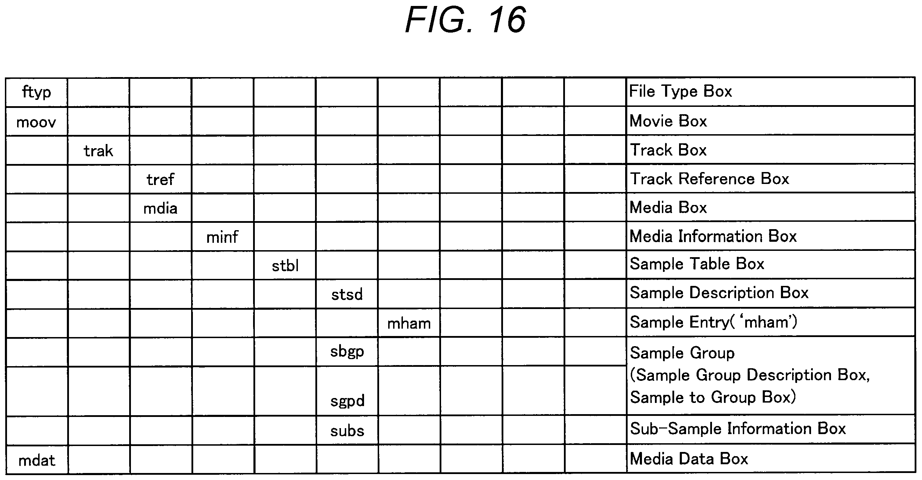

Note that, a Box structure of the ISOBMFF described with reference to Fig. 15 and below is omitted as appropriate. More specifically, MovieBox illustrated in 15B of Fig. 15 includes various components such as a Track Box as illustrated in Fig. 16. Then, SampleEntry is included in a Sample Description Box in the Box structure.

### (4-2-1-1. ISOBMFF (Example 1) of metadata file in MPEG-H 3D Audio)

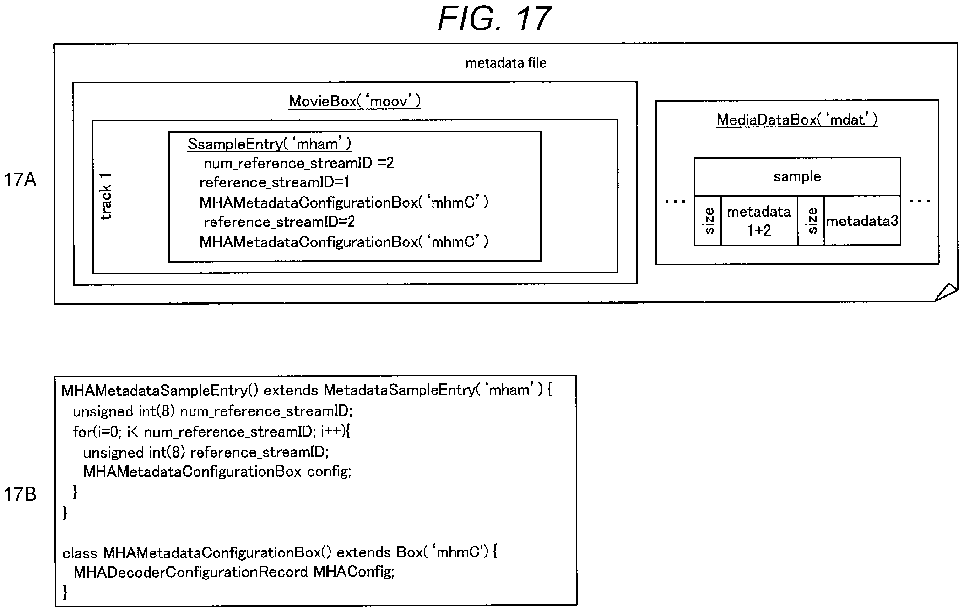

In the above description, the ISOBMFF of the audio file in MPEG-H 3D Audio has been described. Subsequently, with reference to Fig. 17, a description will be given of the ISOBMFF (Example 1) of the metadata file in MPEG-H 3D Audio. More specifically, a description will be given of the ISOBMFF of the metadata file in MPEG-H 3D Audio, which stores the object metadata 1+2+3 corresponding to the object audio data 1 to the object audio data 3 illustrated in 15A of Fig. 15. Furthermore, in MPEG-H 3D Audio, there are two types of storage methods, a RAW method and an MHAS method, and the RAW method will be described first below.

Here, the present disclosure newly defines MHAMetadataSampleEntry('mham'). As illustrated in 17A and 17B of Fig. 17, num_reference_streamID and reference_streamID are described in SampleEntry as information regarding the audio file corresponding to the metadata file. More specifically, num_reference_streamID indicates the number of audio files that the metadata file corresponds to, and reference_streamID indicates streamID of the audio file that the metadata file corresponds to.

Moreover, SampleEntry includes MHAMetadataConfigurationBox('mhmC') for indicating contents of each object metadata. MHAMetadataConfigurationBox('mhmC') includes the same MHADecoderConfigurationRecord as that of the audio file illustrated in 15B of Fig. 15. However, in MHADecoderConfigurationRecord of the metadata file, it is possible to indicate that only the object metadata is included by removing Configuration related to the Elementary stream.

In the sample of MediaDataBox('mdat'), object metadata is stored corresponding to the audio file indicated by each streamID. In other words, the segment file generation unit 113 of the server 100 stores the object metadata stored in each audio file in the sample in the metadata file. At that time, size indicating the data size of each object metadata is added to the head of each object metadata.

Note that, in the present example, num_reference_streamID, reference_streamID, and the like are indicated in SampleEntry in the Box structure of the ISOBMFF, but this is not a limitation. For example, num_reference_streamID, reference_streamID, and the like may be indicated in the Sample Description Box, Sample Group, or Sub-Sample Information Box.

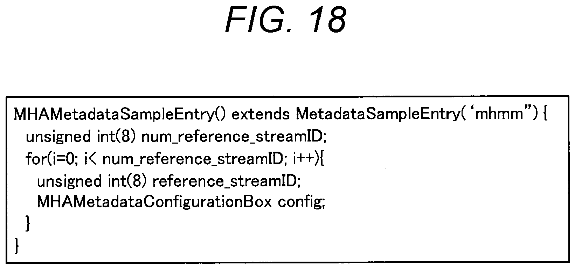

Subsequently, with reference to Fig. 18, a description will be given of the ISOBMFF of the MHAS method. As illustrated in Fig. 18, in the MHAS method, MHAMetadataSampleEntry('mhmm') is used. Furthermore, in the MHAS method, MHAMetadataConfigurationBox can be stored as MHAConfigurationBox in the sample, and thus does not have to be stored in SampleEntry (in the figure, an example is illustrated in which MHAMetadataConfigurationBox is stored in SampleEntry). Other points are the same as those of the RAW method described above, and thus the description thereof will be omitted.

### (4-2-1-2. ISOBMFF (Example 2) of metadata file in MPEG-H 3D Audio)

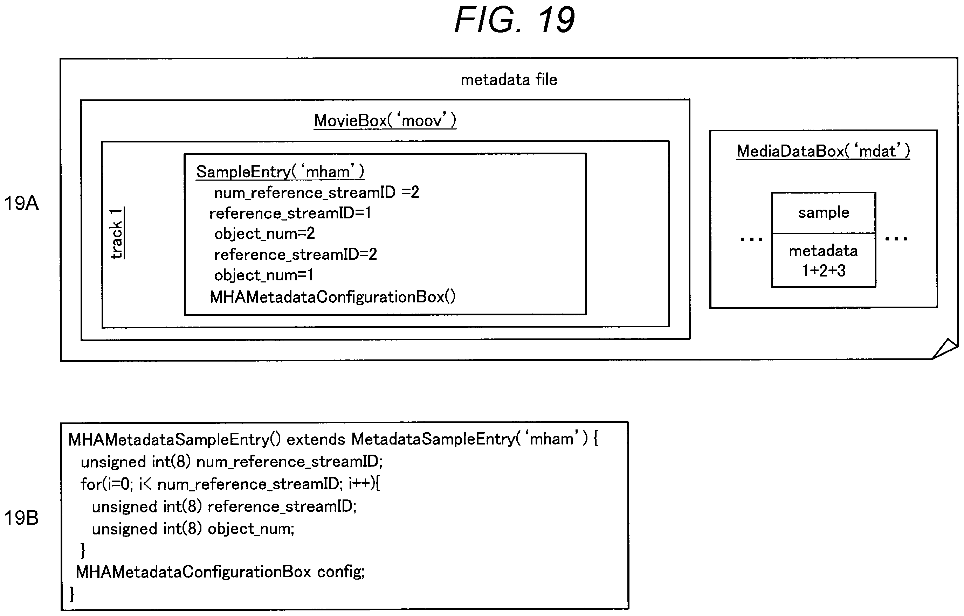

Subsequently, with reference to Fig. 19, a description will be given of the RAW method of the ISOBMFF (Example 2) of the metadata file in MPEG-H 3D Audio.

In the example, the object metadata 1+2+3, in which the object metadata 1+2 stored in the audio file 1 and the object metadata 3 stored in the audio file 2 illustrated in 15A of Fig. 15 are integrated, is stored in the sample. In other words, the encoding processing unit 112 of the server 100 generates the object metadata 1+2+3 by integrating the object metadata 1+2 and the object metadata 3, and the segment file generation unit 113 stores the object metadata 1+2+3 in the sample when creating the metadata file.

In the example, the number of objects of the object metadata stored in the sample is indicated for each streamID. More specifically, as illustrated in 19A of Fig. 19, it is indicated that the number of objects (object_num) of the object metadata corresponding to the audio file 1 whose streamID (reference_streamID) is 1 is two. In other words, it is indicated that the audio file 1 whose streamID is 1 stores the object audio data 1 and the object audio data 2. Furthermore, it is indicated that the number of objects (object_num) of the object metadata corresponding to the audio file 2 whose streamID (reference_streamID) is 2 is one. In other words, it is indicated that the audio file 2 whose streamID is 2 stores the object audio data 3 following the object audio data 2.

Other items including MHAMetadataConfigurationBox illustrated in 19A and 19B of Fig. 19 are the same as those described with reference to Fig. 17, and thus the description thereof will be omitted. Note that, in the present example, reference_streamID and the like are indicated in SampleEntry in the Box structure of the ISOBMFF, but this is not a limitation. For example, reference_streamID and the like may be indicated in the Sample Description Box, Sample Group, or Sub-Sample Information Box.

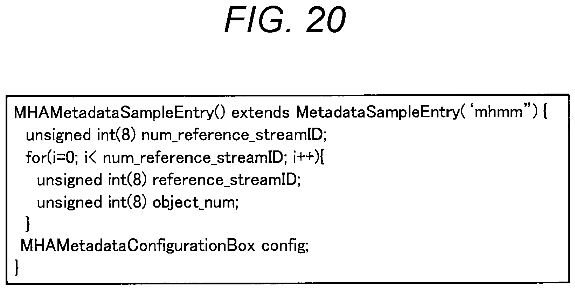

Fig. 20 is a diagram illustrating the ISOBMFF of the MHAS method in the present example. It is the same as that described with reference to Fig. 18 except that the number of objects (object_num) of the object metadata is indicated, and thus the description thereof will be omitted.

### (4-2-2. ISOBMFF of AAC 3D Audio)

In the above description, the ISOBMFF of MPEG-H 3D Audio has been described. Subsequently, a description will be given of the ISOBMFF of AAC 3D Audio.

Before describing the ISOBMFF of the metadata file in AAC 3D Audio, an existing file format will be described first. In AAC 3D Audio, a method of performing signaling of a plurality of audio files is not defined, and is thus newly defined in the present disclosure.

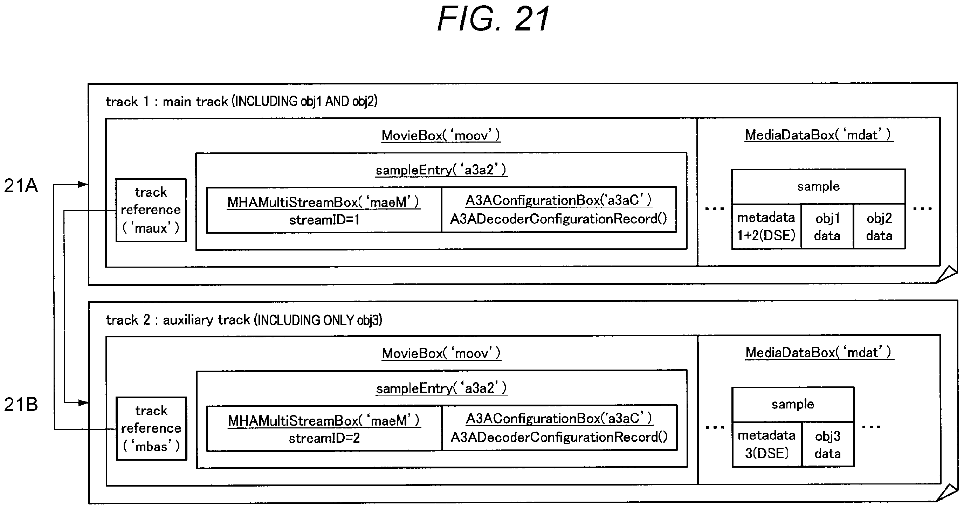

More specifically, as illustrated in 21A and 21B of Fig. 21, for SampleEntry, AAC3DAudioSampleEntry('a3a2') indicating that the plurality of audio files is used (in a case where one file is used, SampleEntry('a3a1') is used). Furthermore, as information for performing signaling of the plurality of audio files, MHAMultiStreamBox('maeM') is used similarly to the case of MPEG-H 3D Audio. As a result, it is possible to indicate a relationship between the audio files by using streamID similarly to the case of MPEG-H 3D Audio.

Furthermore, a relationship between Tracks is indicated by a track reference. More specifically, connection from a main track (in Fig. 21, file1 including the object audio data 1 and the object audio data 2) to an auxiliary track (in Fig. 21, file2 including the object audio data 3) is indicated by track reference('maux') of the main track. Furthermore, connection from the auxiliary track to the main track is indicated by track reference('mbas') of the auxiliary track.

Note that, the Box structure of the ISOBMFF described with reference to Fig. 21 is also omitted as appropriate. More specifically, MovieBox illustrated in 21A and 21B of Fig. 21 includes various components such as the Track Box as illustrated in Fig. 16. Then, SampleEntry is included in the Sample Description Box in the Box structure (however, Sample Entry is not ('mham') illustrated in Fig. 16 but ('a3a2')).

### (4-2-2-1. ISOBMFF (Example 3) of metadata file in AAC 3D Audio)

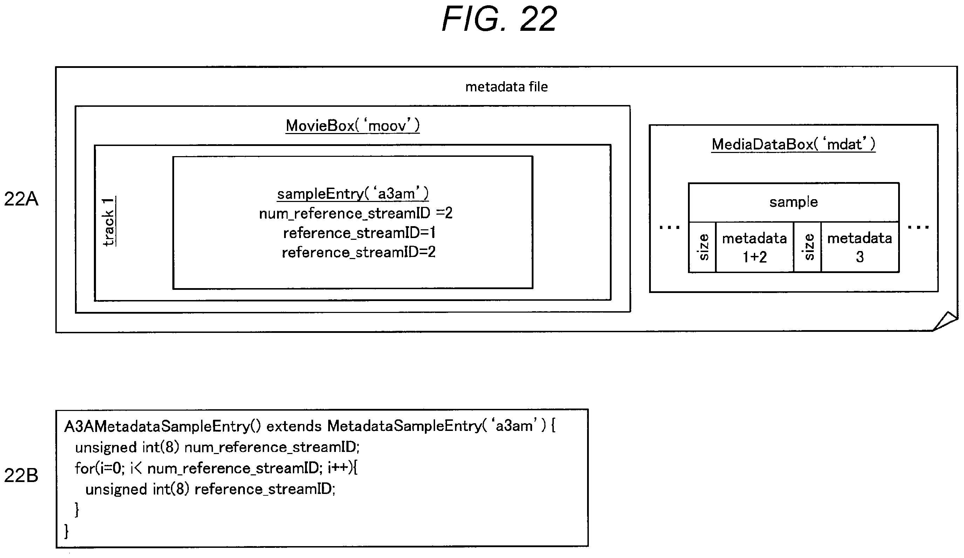

In the above description, the ISOBMFF of the audio file in AAC 3D Audio has been described. Subsequently, with reference to Fig. 22, a description will be given of the ISOBMFF (Example 3) of the metadata file in AAC 3D Audio. In other words, a description will be given of the ISOBMFF of the metadata file in AAC 3D Audio, which stores the object metadata 1+2+3 corresponding to the object audio data 1 to the object audio data 3 illustrated in 15A of Fig. 15.

In the present disclosure, A3AMetadataSampleEntry('a3am') is newly defined indicating that the file is a metadata file in AAC 3D Audio. As illustrated in 22A and 22B of Fig. 22, num_reference_streamID and reference_streamID are described in SampleEntry as information regarding the audio file corresponding to the metadata file. More specifically, num_reference_streamID indicates the number of audio files that the metadata file corresponds to, and reference_streamID indicates streamID of the audio file that the metadata file corresponds to. Note that, in AAC 3D Audio, Configuration of the object metadata is stored in the sample of MediaDataBox('mdat'), and thus signaling is not performed in SampleEntry.

In the sample of MediaDataBox('mdat'), object metadata is stored corresponding to the audio file indicated by each streamID. In other words, the segment file generation unit 113 of the server 100 stores the object metadata stored in each audio file in the sample in the metadata file. At that time, size indicating the data size of each object metadata is added to the head of each object metadata.

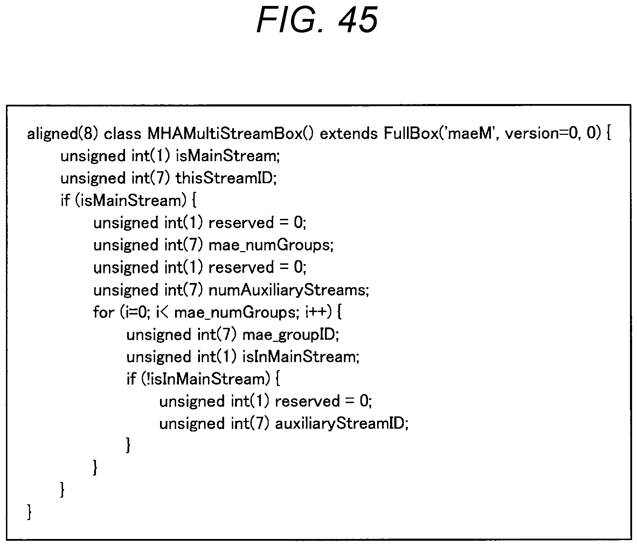

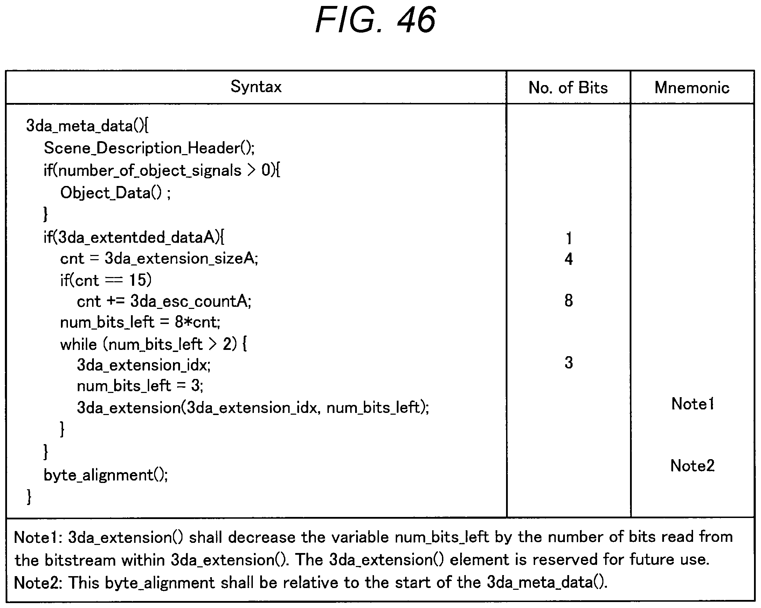

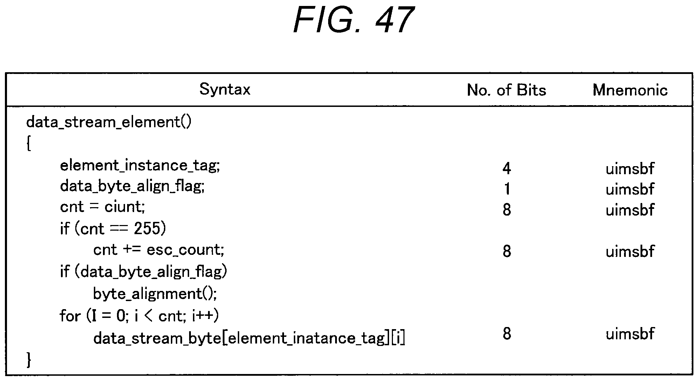

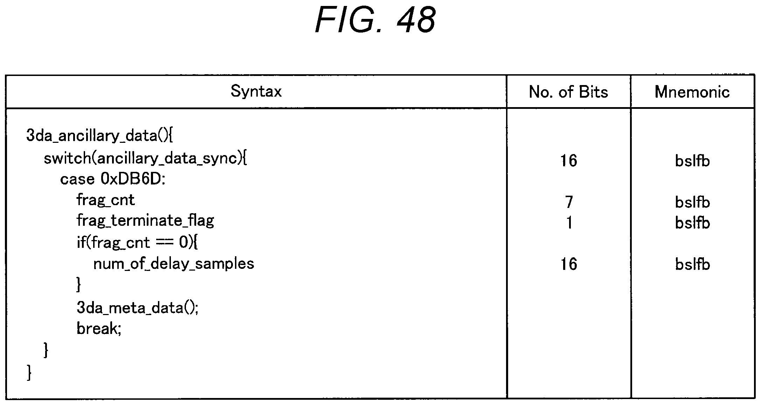

Here, regarding the structure of the sample, 3da_meta_data() of AAC 3D Audio may be used, or 3da_meta_data() which is stored in a DSE and is used in Elementary stream of AAC 3D Audio may be used. Note that, the structure of 3da_meta_data() is as illustrated in Fig. 45, the structure of 3da_meta_data() stored in the DSE is as illustrated in Fig. 46, and the structure of the DSE is as illustrated in Fig. 47. Note that, the structure of 3da_ancillary_data stored in data_stream_byte in the DSE illustrated in Fig. 47 is as illustrated in Fig. 48. However, in a case where the size of 3da_meta_data() is larger than the maximum size of data_stream_byte of the DSE, 3da_meta_data() is divided and stored in a plurality of the DSEs.

Note that, the Box structure of the ISOBMFF described with reference to Fig. 22 and below is also omitted as appropriate. More specifically, MovieBox illustrated in 22A of Fig. 22 includes various components such as the Track Box as illustrated in Fig. 16. Then, SampleEntry is included in the Sample Description Box in the Box structure (however, SampleEntry not ('mham') illustrated in Fig. 16 but ('a3am')).

Furthermore, in the present example, num_reference_streamID, reference_streamID, and the like are indicated in SampleEntry in the Box structure of the ISOBMFF, but this is not a limitation. For example, num_reference_streamID, reference_streamID, and the like may be indicated in the Sample Description Box, Sample Group, or Sub-Sample Information Box.

### (4-2-2-2. ISOBMFF (Example 4) of metadata file in AAC 3D Audio)

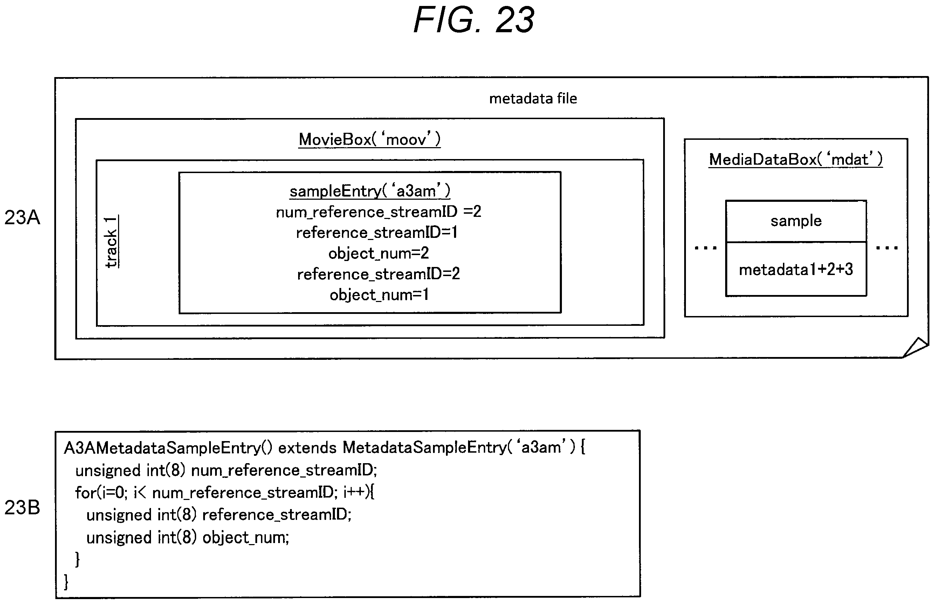

Subsequently, with reference to Fig. 23, a description will be given of the ISOBMFF (Example 4) of the metadata file in AAC 3D Audio.

In the example, the object metadata 1+2+3, in which the object metadata 1+2 stored in the audio file 1 and the object metadata 3 stored in the audio file 2 illustrated in 15A of Fig. 15 are integrated, is stored in the sample. In other words, the encoding processing unit 112 generates the object metadata 1+2+3 by integrating the object metadata 1+2 and the object metadata 3, and the segment file generation unit 113 stores the object metadata 1+2+3 in the sample when creating the metadata file.

In the example, the number of objects of the object metadata stored in the sample is indicated for each streamID. More specifically, as illustrated in 23A of Fig. 23, it is indicated that the number of objects (object_num) of the object metadata corresponding to the audio file 1 whose streamID (reference_streamID) is 1 is two. In other words, it is indicated that the audio file 1 whose streamID is 1 stores the object audio data 1 and the object audio data 2. Furthermore, it is indicated that the number of objects (object_num) of the object metadata corresponding to the audio file 2 whose streamID (reference_streamID) is 2 is one. In other words, it is indicated that the audio file 2 whose streamID is 2 stores the object audio data 3 following the object audio data 2.

Here, regarding the structure of the sample, 3da_meta_data() of AAC 3D Audio may be used, or 3da_meta_data() which is stored in a DSE and is used in Elementary stream of AAC 3D Audio may be used.

Other items illustrated in 23A and 23B of Fig. 23 are the same as those described with reference to Fig. 22, and thus the description thereof will be omitted. Note that, in the present example, reference_streamID and the like are indicated in SampleEntry in the Box structure of the ISOBMFF, but this is not a limitation. For example, reference_streamID and the like may be indicated in the Sample Description Box, Sample Group, or Sub-Sample Information Box.

### (4-2-3. Example of association between audio file and metadata file)

Subsequently, a description will be given of an example of association between audio files and a metadata file. The present disclosure implements the association between the audio files and the metadata file by using an MPD file. Here, in the definition regarding the MPD file, a signaling method of the audio file is defined, but a signaling method of the metadata file is not defined. Thus, in the present disclosure, the signaling method of the metadata file in the MPD file is defined.

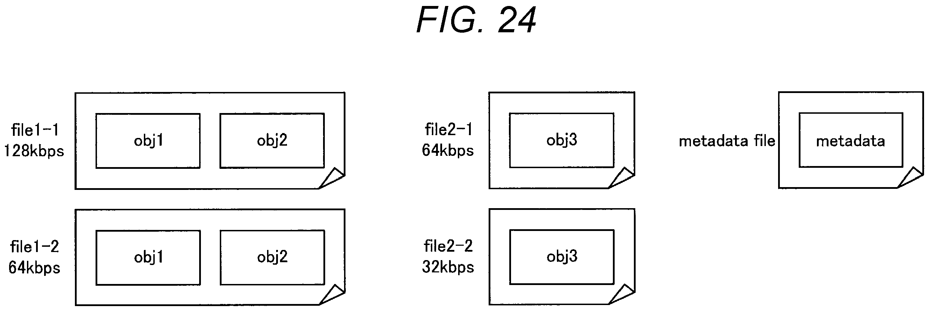

For example, as illustrated in Fig. 24, a case is considered where there are bit rate variations of an audio file storing the object audio data 1 and the object audio data 2, bit rate variations of an audio file storing the object audio data 3, and a metadata file corresponding to theses audio files.

### (4-2-3-1. Example (Example 1) of association between audio files and metadata file)

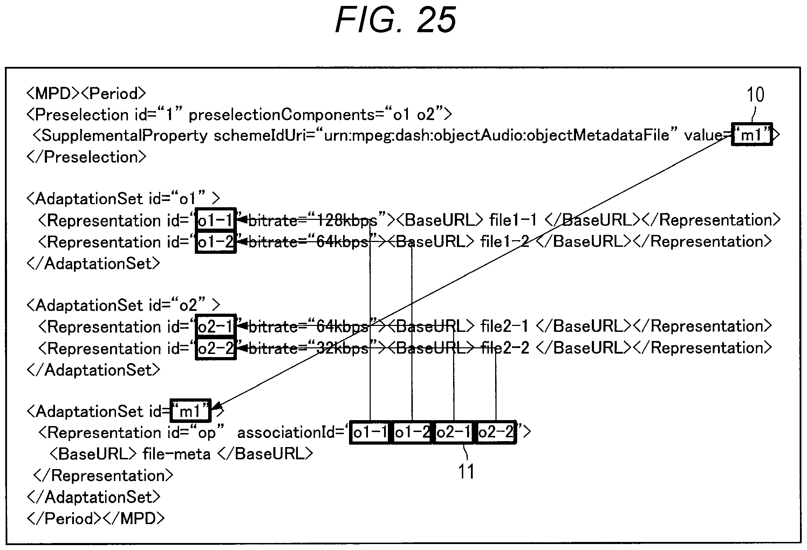

This example is a method of facilitating acquisition of a metadata file by adding a Property to a Preselection element. The example will be described in detail with reference to Fig. 25.

As illustrated in Fig. 25, AdaptationSet including object audio data used for reproduction is indicated in preselectionComponents by Preselection in the MPD file, whereby reproduction of audio content is implemented. As described above, since reproduction is performed with Preselection as a starting point, the present disclosure performs signaling of AdaptationSet of the metadata file to Preselection to facilitate acquisition of the metadata file.

More specifically, the present disclosure adds "SupplementalProperty schemeIdUri="urn:mpeg:dash:objectAudio:objectMetadataFile" value="**"". Here, the value indicates id of AdaptationSet including the metadata file. For example, the MPD file processing unit 212 of the client 200 that has acquired the MPD file in Fig. 25 can recognize from SupplementalProperty included in Preselection that the id of AdaptationSet including the metadata file is "m1" (reference numeral 10 in the figure).

Then, for the association between the audio files and the metadata file, associationId of existing Representation is used. More specifically, the MPD file processing unit 212 of the client 200 can recognize the audio files that the metadata file corresponds to on the basis of that associationId is "o1-1", "o1-2", "o2-1", "o2-2" (reference numeral 11 in the figure).

However, in the method of the example, it is necessary for the client 200 to confirm streamID of the metadata file to confirm a match between streamID included in the metadata file and streamID of each audio file, and then further acquire each audio file and confirm a MovieBox('moov') portion of the audio file. In other words, the client 200 acquires unnecessary audio files not used for reproduction.

Furthermore, the object metadata has the same contents regardless of the bit rate if the objects are the same as each other. That is, the object metadata corresponding to the audio files included in the same AdaptationSet are the same as each other. Therefore, the association performed with associationId is only required to be performed not in units of Representation but in units of AdaptationSet. In other words, there is waste also in the description regarding the association between the audio files and the metadata file.

### (4-2-3-2. Example (Example 2) of association between audio files and metadata file)

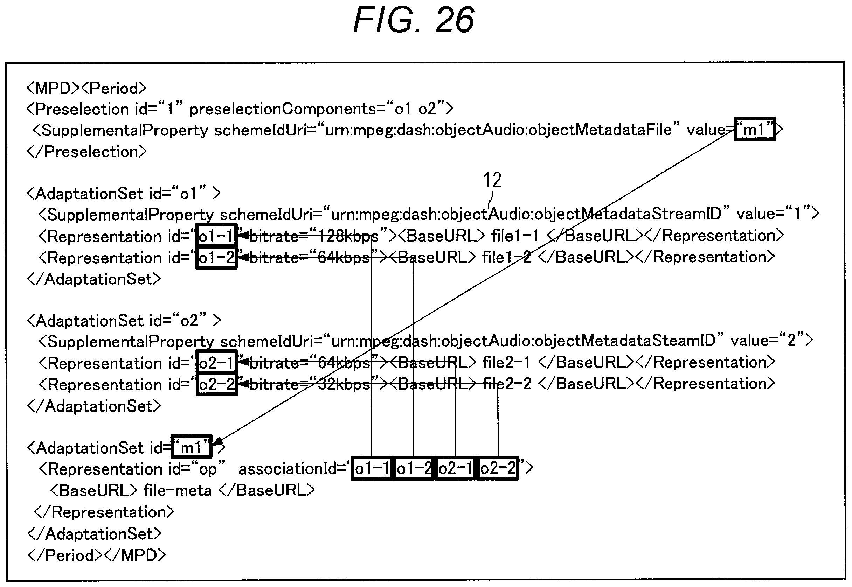

In this example, a method of indicating streamID of the audio file is added to Example 1 described above. More specifically, as illustrated in Fig. 26, in AdaptationSet including each audio file, "SupplementalProperty schemeIdUri="urn:mpeg:dash:objectAudio:objectMetadataStre amID" value="**"" (reference numeral 12 in the figure) is added. The value indicates the streamID of the audio file.

As a result, the MPD file processing unit 212 of the client 200 can confirm the match between streamID included in the metadata file and streamID of each audio file, in the MPD file. In other words, the client 200 does not have to acquire an unnecessary audio file not used for reproduction. Note that, other contents including the association between the audio files and the metadata file are the same as those of the MPD file illustrated in Fig. 25, and thus the description thereof will be omitted.

### (4-2-3-3. Example (Example 3) of association between audio files and metadata file)

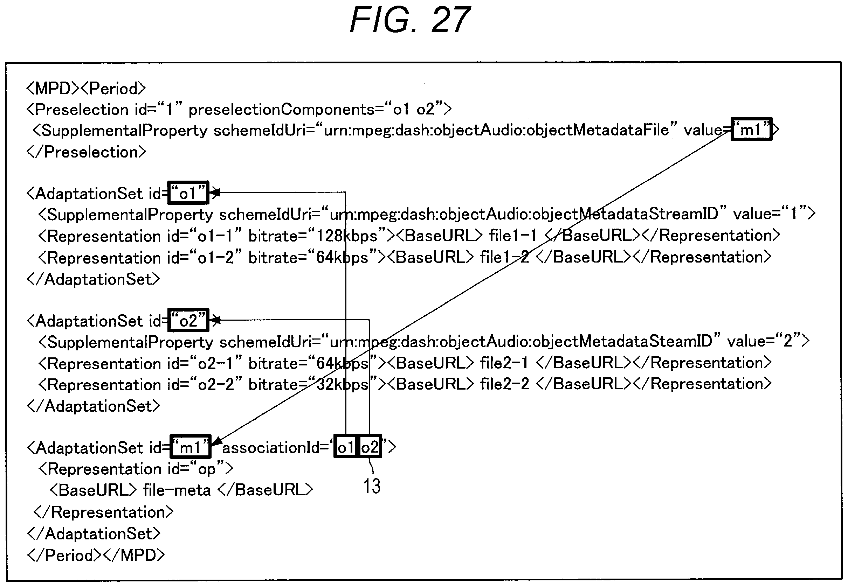

In this example, waste of the association between the audio files and the metadata file is omitted from Example 2 described above. It becomes possible that associationId for performing association between AdaptationSet including the metadata file and AdaptationSet including each audio file is set as an attribute of AdaptationSet. More specifically, as illustrated in Fig. 27, associationId (reference numeral 13 in the figure) indicating AdaptationSet of the audio file can be set as an attribute of AdaptationSet including the metadata file. As a result, the waste of the description regarding the association between the audio files and the metadata file is reduced. Note that, other contents are the same as those of the MPD file illustrated in Fig. 26, and thus the description thereof will be omitted.

### (4-2-3-4. Example (Example 4) of association between audio files and metadata file)

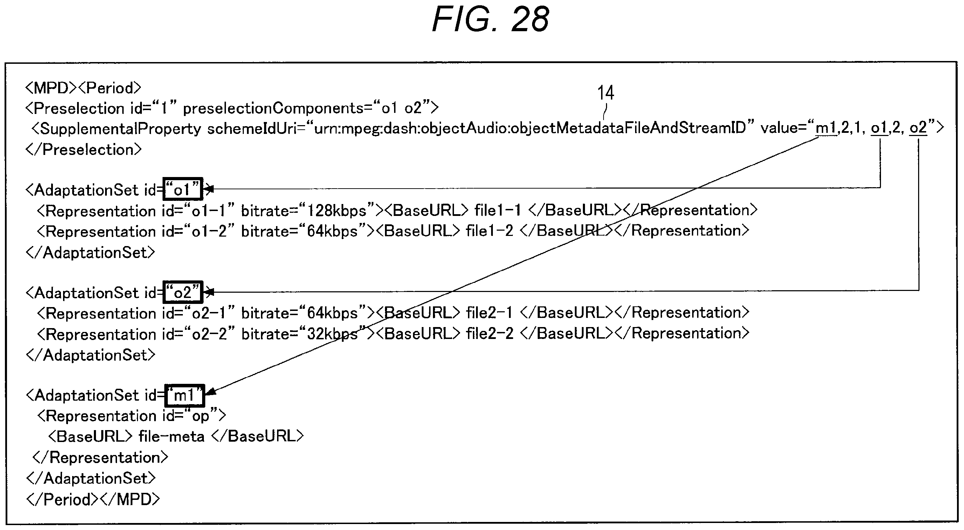

This example is a method of performing signaling of AdaptationSet and the like of the metadata file to Preselection. More specifically, as illustrated in Fig. 28, "SupplementalProperty schemeIdUri="urn:mpeg:dash:objectAudio:objectMetadataFile AndStreamID" value="metadataASid,num-streamID,streamID1,audioASid1,str eamID2,audioASid2,...,streamIDk,audioASidk"" (reference numeral 14 in the figure) is added.

Regarding the value, metadataASid indicates the id of AdaptationSet including the metadata file, and num_streamID indicates the number of audio files that the metadata file corresponds to (in other words, it is the same as num_reference_streamID in the ISOBMFF). Then, streamIDk indicates streamID of the audio file that the metadata file corresponds to, and audioASidk indicates the id of AdaptationSet including the audio file of the streamID.

### (4-2-3-5. Example (Example 5) of association between audio files and metadata file)

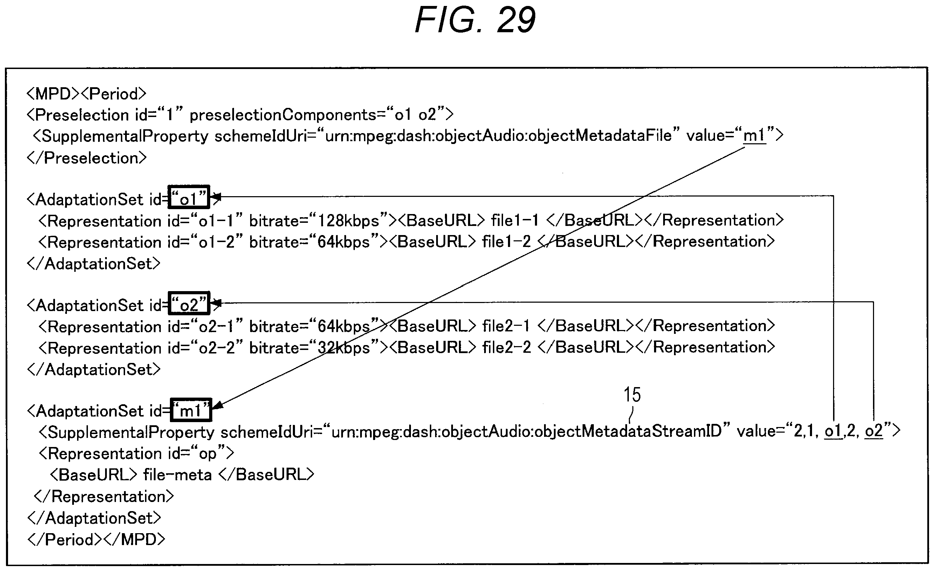

In this example, signaling is performed of num_streamID, streamIDk, and audioASidk in Example 4 with AdaptationSet of the metadata file. More specifically, as illustrated in Fig. 29, "SupplementalProperty schemeIdUri="urn:mpeg:dash:objectAudio:objectMetadataStre amID" value= "num_streamID,streamlDk,audioASidk"" (reference numeral 15 in the figure) is added to AdaptationSet of the metadata file. Note that, other contents are the same as those of the MPD file illustrated in Fig. 28, and thus the description thereof will be omitted.

### <5. Bit rate information signaling example>

In the above description, the priority information signaling example has been described. Subsequently, a bit rate information signaling example will be described. More specifically, an example will be described of a method of indicating bit rate information of each object audio data by an MPD file for a case where a plurality of pieces of object audio data is stored in one audio file.

### (5-1. Signaling example in case where bit rate does not change over time)

First, a signaling example will be described in a case where the bit rate does not change over time.

### (5-1-1. Signaling example (Example 1) in case where bit rate does not change over time)

This example is a bit rate information signaling example that can be used only in a case where the bit rates of the plurality of pieces of object audio data stored in the audio file are equal to each other.

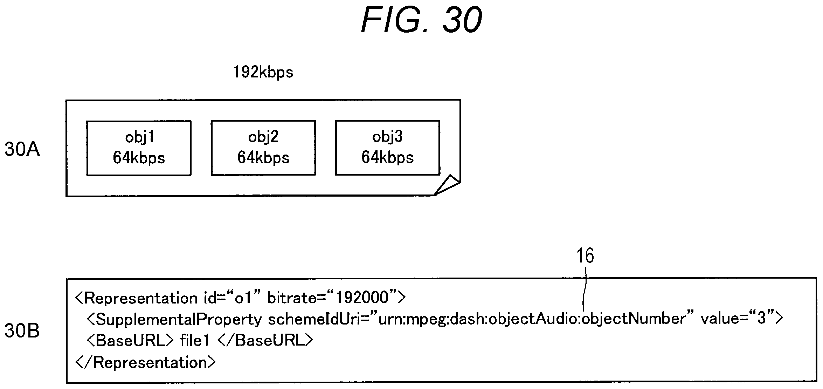

For example, as illustrated in 30A of Fig. 30, a case is considered where the object audio data 1 to the object audio data 3 having the bit rates (64 [kbps]) equal to each other are stored in one audio file. In this case, the MPD file generation unit 114 of the server 100 generates an MPD file as illustrated in 30B.

More specifically, "SupplementalProperty schemeIdUri="urn:mpeg:dash:objectAudio:objectNumber" value="**"" (reference numeral 16 in the figure) is added to Representation of the MPD file. The value indicates the number of pieces of object audio data stored in the audio file. As a result, the MPD file processing unit 212 of the client 200 can calculate a value obtained by dividing the bit rate ("bitrate="192000"" in the figure) of the entire audio file by the number of pieces of object audio data, as a bit rate of each object audio data. Note that, the contents of the MPD file described with reference to Fig. 30 and below are omitted as appropriate.

### (5-1-2. Signaling example (Example 2) in case where bit rate does not change over time)

This example is a signaling example of bit rate information that can be used even in a case where the bit rates of the plurality of pieces of object audio data stored in an audio file are different from each other.

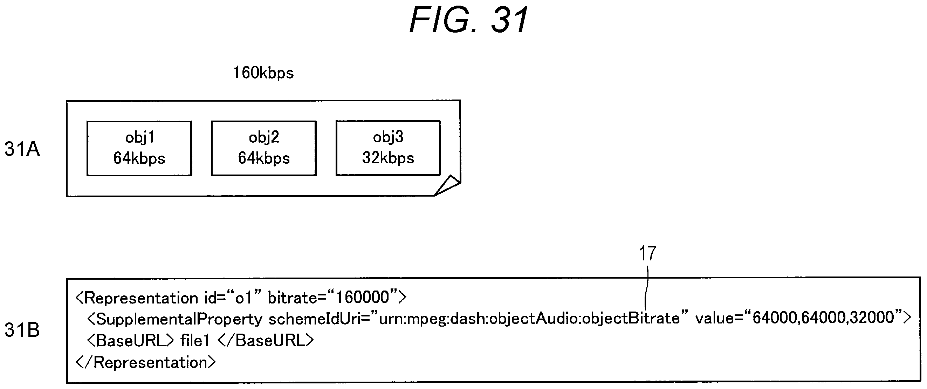

For example, as illustrated in 31A of Fig. 31, a case is considered where the object audio data 1 and the object audio data 2 each having a bit rate of 64 [kbps] and the object audio data 3 having a bit rate of 32 [kbps] are stored in one audio file. In this case, the MPD file generation unit 114 of the server 100 generates an MPD file as illustrated in 31B.

More specifically, "SupplementalProperty schemeIdUri="urn:mpeg:dash:objectAudio:objectBitrate" value="bitrate1, bitrate2,...,bitratek"" (reference numeral 17 in the figure) is added to Representation of the MPD file. The value indicates the bit rate of each object audio data stored in the audio file in the storage order of the object audio data. As a result, the MPD file processing unit 212 of the client 200 can recognize the bit rate of each object audio data.

### (5-1-3. Signaling example (Example 3) in case where bit rate does not change over time)

This example is a signaling example of bit rate information that can be used even in a case where the bit rates of the plurality of pieces of object audio data stored in an audio file are different from each other.

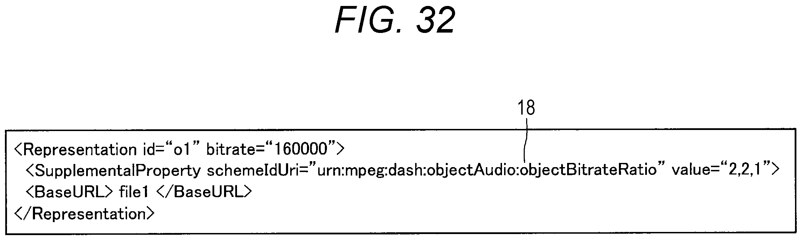

For example, as illustrated in 31A of Fig. 31, a case is considered where the object audio data 1 and the object audio data 2 each having a bit rate of 64 [kbps] and the object audio data 3 having a bit rate of 32 [kbps] are stored in one audio file. In this case, the MPD file generation unit 114 of the server 100 may generate an MPD file as illustrated in Fig. 32.

More specifically, "SupplementalProperty schemeIdUri="urn:mpeg:dash:objectAudio:objectBitrateRatio" value="ratio1, ratio2,...,ratiok"" (reference numeral 18 in the figure) is added to Representation of the MPD file. The value indicates the ratio of the bit rate of each object audio data stored in the audio file in the storage order of the object audio data. In the example of Fig. 32, the value indicates that the ratio of the bit rate of from the object audio data 1 to the object audio data 3 is "2 : 2 : 1".

As a result, the MPD file processing unit 212 of the client 200 can calculate the bit rate of each object audio data by using the ratio between the bit rate ("bitrate="160000"" in the figure) of the entire audio file and the bit rate of each object audio data. More specifically, the MPD file processing unit 212 can recognize that the bit rate of the object audio data 1 stored first is 2/5 of the bit rate of the entire audio file (160 [kbps]), and calculate the bit rate of the object audio data 1 as 64 [kbps]. The bit rates of the object audio data 2 and the object audio data 3 can be calculated in a similar method.

### (5-1-4. Signaling example (Example 4) in case where bit rate does not change over time)

This example is a signaling example of bit rate information combining Example 1 and Example 2 described above.

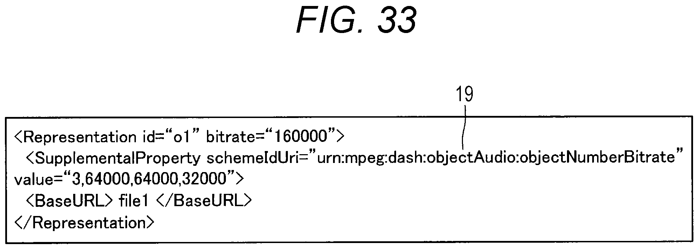

For example, as illustrated in 31A of Fig. 31, a case is considered where the object audio data 1 and the object audio data 2 each having a bit rate of 64 [kbps] and the object audio data 3 having a bit rate of 32 [kbps] are stored in one audio file. In this case, the MPD file generation unit 114 of the server 100 may generate an MPD file as illustrated in Fig. 33.

More specifically, "SupplementalProperty schemeIdUri="urn:mpeg:dash:objectAudio:objectNumberBitrat e" value="number, bitrate1, bitrate2,...,bitratek"" (reference numeral 19 in the figure) is added to Representation of the MPD file. The number in the value indicates the number of pieces of object audio data stored in the audio file, and bitratek indicates the bit rate of each object audio data in the storage order of the object audio data.

In the example, even if the MPD file generation unit 114 of the server 100 omits as appropriate either the number or bitratek described above, the MPD file processing unit 212 of the client 200 can appropriately calculate the bit rate of each object audio data.

Note that, instead of that Example 1 and Example 2 described above are combined, Example 1 and Example 3 may be combined. In other words, information on the number of pieces of object audio data stored in the audio file, and information in which the ratio of the bit rate of each object audio data is indicated in the storage order of the object audio data may be indicated in the MPD file.

### (5-2. Signaling example in case where bit rate changes over time)

Subsequently, a signaling example will be described in a case where the bit rate changes over time. Here, a signaling example will be described in a case where the bit rate changes over time depending on the priority.

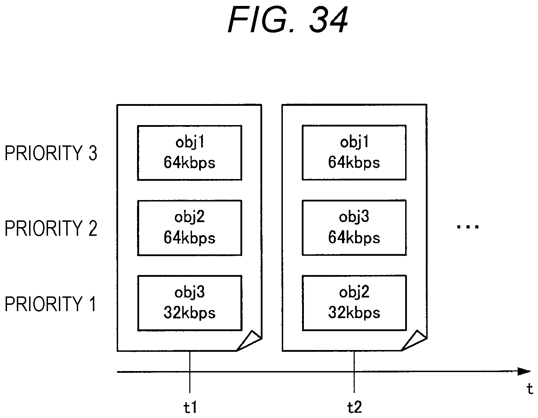

For example, as illustrated in Fig. 34, a case is considered where the object audio data 1 to the object audio data 3 are stored in one audio file. Then, at time t1, the priority of the object audio data 1 is 3 and the bit rate thereof is 64 [kbps], the priority of the object audio data 2 is 2 and the bit rate thereof is 64 [kbps], and the priority of the object audio data 3 is 1 and the bit rate thereof is 32 [kbps]. Then, at subsequent time t2, it is assumed that the priority of the object audio data 2 changes to 1 and the bit rate thereof changes to 32 [kbps], and the priority of the object audio data 3 changes to 2 and the bit rate thereof changes to 64 [kbps].

### (5-2-1. Signaling example (Example 5) in case where bit rate changes over time)

This example is a signaling example indicating only that the bit rate of the object audio data stored in the audio file changes over time.

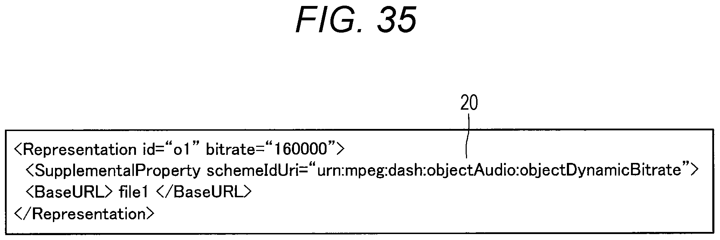

More specifically, as illustrated in Fig. 35, "SupplementalProperty schemeIdUri="urn:mpeg:dash:objectAudio:objectDynamicBitra te"" (reference numeral 20 in the figure) is added to Representation of the MPD file. As a result, the MPD file processing unit 212 of the client 200 can recognize that the bit rate of the object audio data changes over time, and use for any purpose is possible. Note that, the contents of the MPD file described with reference to Fig. 35 and below are omitted as appropriate.

### (5-2-2. Signaling example (Example 6) in case where bit rate changes over time)

This example is a signaling example indicating that the bit rate of the object audio data changes over time by indicating that the bit rate of the object audio data stored in the audio file is determined depending on the priority.

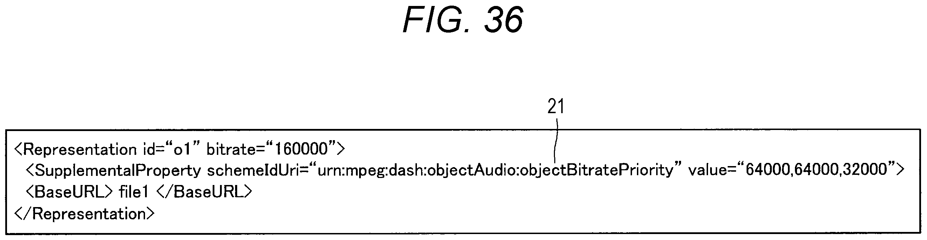

More specifically, as illustrated in Fig. 36, "SupplementalProperty schemeIdUri="urn:mpeg:dash:objectAudio:objectBitratePrior ity" value="bitrate1,bitreta2,...,bitratek"" (reference numeral 21 in the figure) is added to Representation of the MPD file. The value indicates the bit rate of the object audio data arranged in the descending order of priority. As a result, the MPD file processing unit 212 of the client 200 can recognize the bit rate of each object audio data.

### (5-2-3. Signaling example (Example 7) in case where bit rate changes over time)

This example is a signaling example indicating that the bit rate of the object audio data changes over time by indicating that the ratio of the bit rate of the object audio data stored in the audio file is determined depending on the priority.

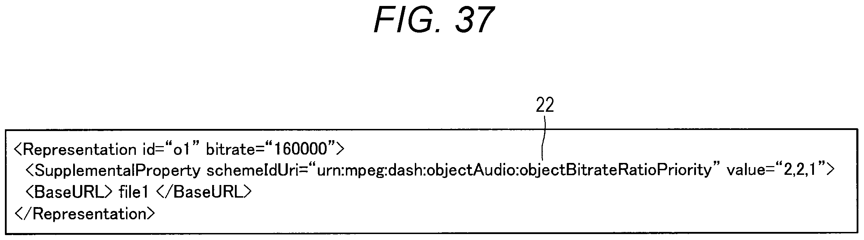

More specifically, as illustrated in Fig. 37, "SupplementalProperty schemeIdUri="urn:mpeg:dash:objectAudio:objectBitrateRatio Priority" value="ratio1,ratio2,...,ratiok"" (reference numeral 22 in the figure) is added to Representation of the MPD file. The value indicates the ratio of the bit rate of the object audio data arranged in the descending order of priority.

As a result, the MPD file processing unit 212 of the client 200 can calculate the bit rate of each object audio data by using the ratio between the bit rate ("bitrate="160000"" in the figure) of the entire audio file and the bit rate of each object audio data.

### (5-2-4. Signaling example (Example 8) in case where bit rate changes over time)

This example is a signaling example that can switch between a method of indicating the bit rate in the storage order in the audio file and a method of indicating the bit rate in the descending order of priority.

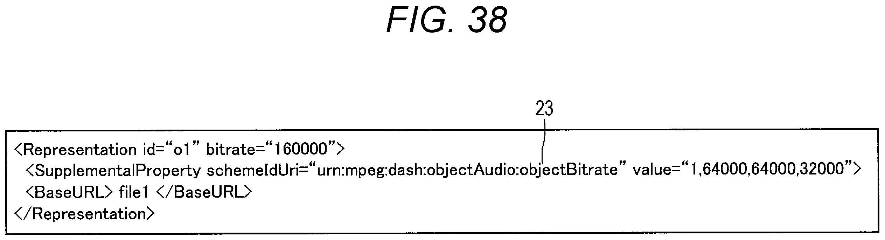

More specifically, as illustrated in Fig. 38, "SupplementalProperty schemeIdUri="urn:mpeg:dash:objectAudio:objectBitrate" value="flag, bitrate1,bitrate2,...,bitratek"" (reference numeral 23 in the figure) is added to Representation of the MPD file. The flag in the value indicates whether the bit rates are arranged in the storage order in the audio file or in the descending order of priority. For example, the fact that flag is 0 indicates that the bit rates are arranged in the storage order in the audio file, and the fact that flag is 1 indicates that the bit rates are arranged in the descending order of priority. Furthermore, bitratek in the value indicates the bit rate of each object audio data.

Note that, the bit rate of each object audio data is not indicated by bitratek in the value, but the ratio of the bit rate of each object audio data may be indicated by ratiok. Furthermore, even if the priorities of the object audio data included in the audio file are the same as each other, an audio file including the object audio data having different bit rates may be created, and the signaling as described above may be performed. In this case, the client 200 can select an audio file desired by the user.

### <6. Description information signaling example>

In the above description, the bit rate information signaling example has been described. Subsequently, a description information signaling example will be described.

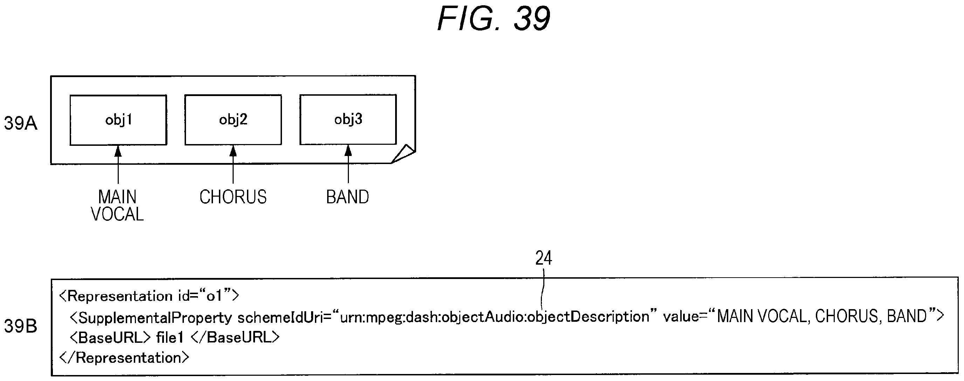

Here, description information is information indicating contents (or type, classification, category, or the like) of the object audio data stored in the audio file. For example, as illustrated in 39A of Fig. 39, it is assumed that the object audio data 1 to the object audio data 3 are stored in one audio file, and contents thereof are a main vocal, a chorus, and a band, respectively. In this case, the MPD file generation unit 114 of the server 100 generates an MPD file as illustrated in 39B.

More specifically, "SupplementalProperty schemeIdUri="urn:mpeg:dash:objectAudio:objectDescription" value="description1, description2,...,descriptionk"" (reference numeral 24 in the figure) is added to Representation of the MPD file. The value indicates the description information of the object audio data in the storage order of the object audio data. For example, ""main vocal,chorus,band"" is stored in the value as illustrated in 39B.

As a result, the user operating the client 200 can recognize the contents of the respective object audio data, and thus can easily select a desired audio file. Note that, the contents of the MPD file illustrated in 39B of Fig. 39 are omitted as appropriate.

### <7. Processing example of client 200>

In the above description, the signaling example description information has been described. Subsequently, a processing example of the client 200 will be described.

### (7-1. Processing example of client 200 in case where priority does not change over time)

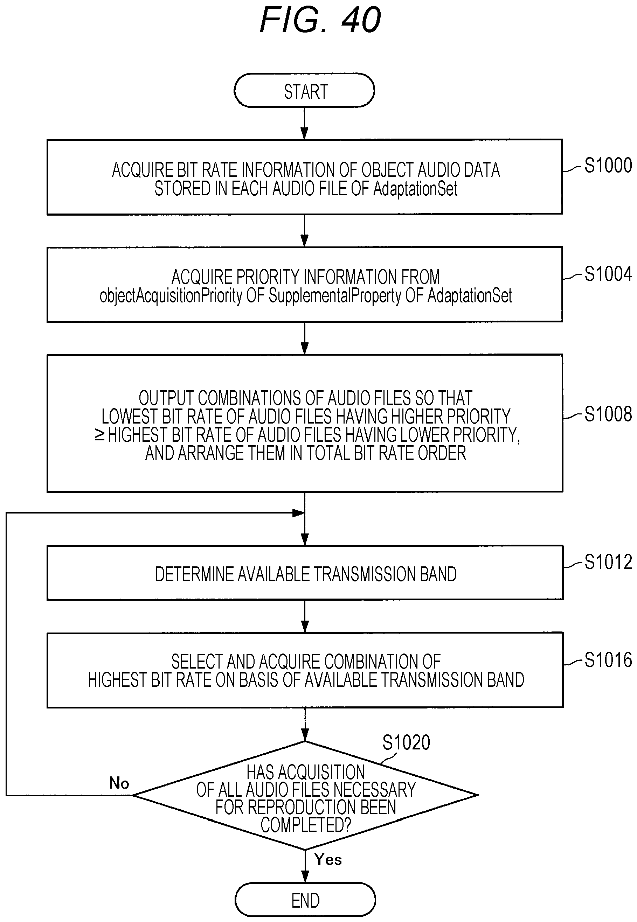

First, with reference to Fig. 40, a description will be given of a processing example of the client 200 in the case where the priority does not change over time. Fig. 40 is a flowchart illustrating a processing example until the client 200 acquires an audio file used for reproducing audio content in the case where the priority does not change over time.

In step S1000, the MPD file processing unit 212 of the client 200 acquires, from an MPD file, bit rate information of object audio data stored in each audio file of AdaptationSet of the MPD file (or calculates bit rate information on the basis of information of the MPD file). In step S1004, the MPD file processing unit 212 acquires priority information from objectAcquisitionPriority of SupplementalProperty of AdaptationSet.

In step S1008, the segment file selection unit 213 outputs a combination of audio files in which the lowest bit rate of object audio data stored in an audio file having a higher priority is greater than or equal to the highest bit rate of object audio data stored in an audio file having a lower priority. In other words, the segment file selection unit 213 outputs a combination in which object audio data of an audio file having a higher priority has a higher bit rate. Then, the segment file selection unit 213 arranges the output audio files in the descending order of the total bit rate.

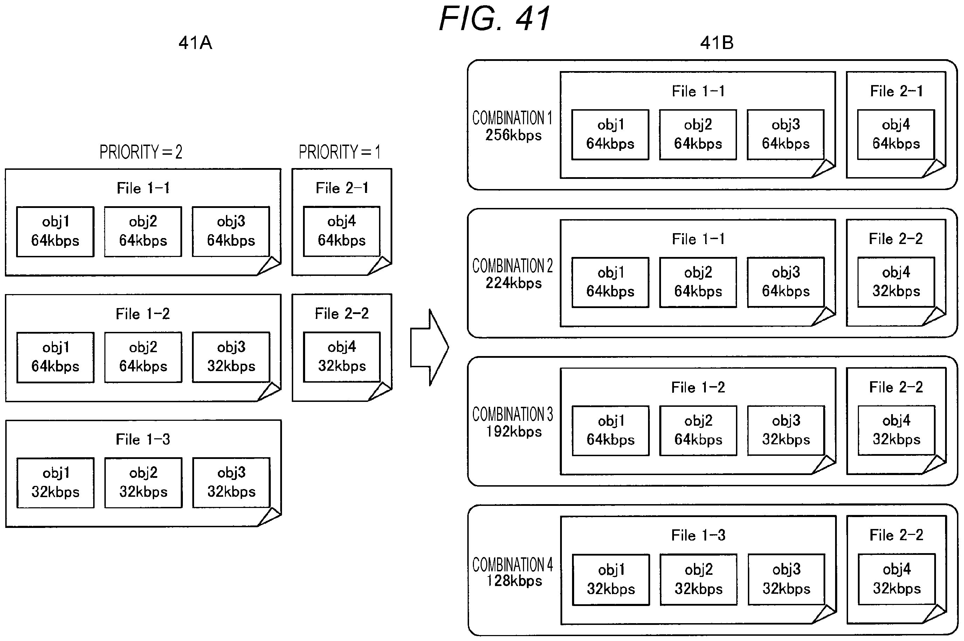

Here, a specific example will be described with reference to Fig. 41. As illustrated by 41A of Fig. 41, a case is considered where there are an audio file 1-1 to an audio file 1-3 that are bit rate variations of the audio file 1 storing the object audio data 1 to the object audio data 3, and an audio file 2-1 and an audio file 2-2 that are bit rate variations of the audio file 2 storing the object audio data 4. Then, it is assumed that the priority of the audio file 1 is 2, and the priority of the audio file 2 is 1.

In this case, in step S1008, combinations of audio files, in which the lowest bit rate of object audio data stored in an audio file having a higher priority is greater than or equal to the highest bit rate of object audio data stored in an audio file having a lower priority, are a combination 1 to a combination 4 illustrated in 41B.

Then, in step S1012, the segment file selection unit 213 determines an available transmission band. In step S1016, the segment file selection unit 213 selects a combination that can be transmitted at the highest bit rate on the basis of the available transmission band from the combinations output in step S1008, and the segment file acquisition unit 214 acquires the audio files of the combination from the server 100.

Thereafter, in a case where there is segment data at the next time (step S1020/No), the processing of step S1012 and step S1016 is continuously performed. In a case where there is no segment data at the next time (step S1020/Yes), in other words, in a case where the segment data are acquired up to the end of the content, a series of processing steps regarding the acquisition of the audio file ends. The segment data acquired in step S1016 is subjected to decoding processing, synthesis processing, and the like of the object audio data by the decoding processing unit 215 and the synthesis processing unit 216, whereby audio content is provided to the user.

### (7-2. Processing example of client 200 in case where priority changes over time)

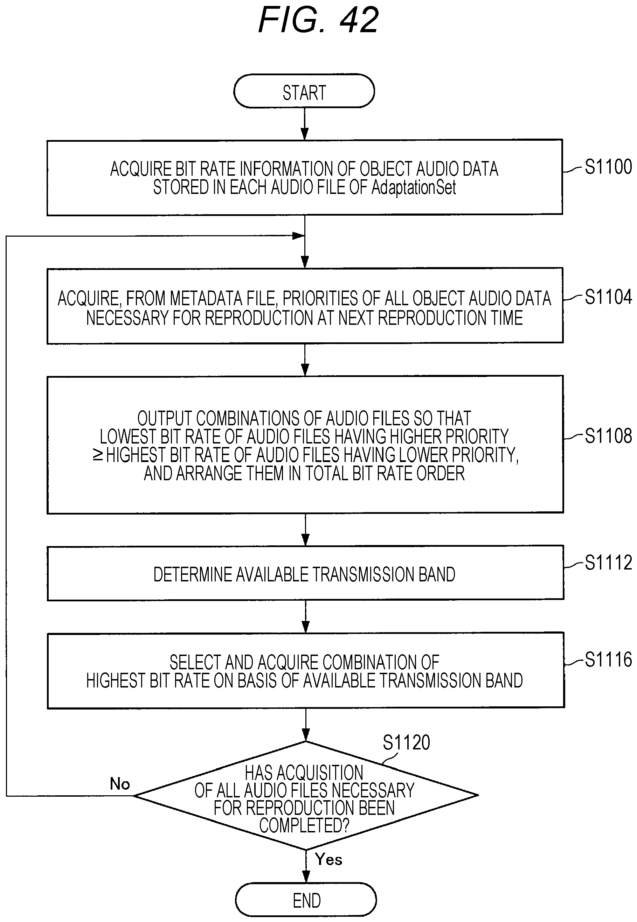

Subsequently, with reference to Fig. 42, a description will be given of a processing example of the client 200 in the case where the priority changes over time. Fig. 42 is a flowchart illustrating a processing example until the client 200 acquires the audio file used for reproducing the audio content in the case where the priority changes over time.

In step S1100, the MPD file processing unit 212 of the client 200 acquires, from an MPD file, bit rate information of object audio data stored in each audio file of AdaptationSet of the MPD file (or calculates bit rate information on the basis of information of the MPD file). In step S1104, the segment file selection unit 213 acquires, from a metadata file, the priorities of all the object audio data necessary for the reproduction at the next reproduction time.

In step S1108, the segment file selection unit 213 outputs a combination of audio files in which the lowest bit rate of object audio data stored in an audio file having a higher priority is greater than or equal to the highest bit rate of object audio data stored in an audio file having a lower priority. In other words, the segment file selection unit 213 outputs a combination in which object audio data of an audio file having a higher priority has a higher bit rate. Then, the segment file selection unit 213 arranges the output audio files in the descending order of the total bit rate.

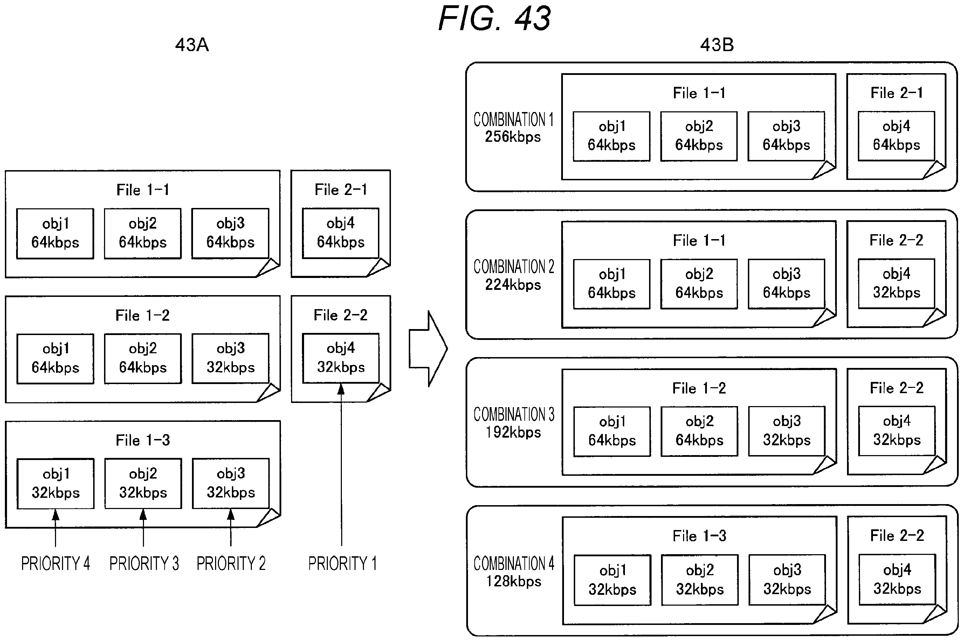

Here, a specific example will be described with reference to Fig. 43. As illustrated in 43A of Fig. 43, a case is considered where there are an audio file 1-1 to an audio file 1-3 that are bit rate variations of the audio file 1 storing the object audio data 1 to the object audio data 3, and an audio file 2-1 and an audio file 2-2 that are bit rate variations of the audio file 2 storing the object audio data 4. Then, it is assumed that the priority of the object audio data 1 is 4, the priority of the object audio data 2 is 3, the priority of the object audio data 3 is 2, the priority of the object audio data 4 is 1, and these priorities change over time. Then, it is assumed that the priorities of the audio file 1 and the audio file 2 change according to changes in the priorities of the object audio data stored in the respective audio files.

In this case, in step S1108, combinations of audio files, in which the lowest bit rate of object audio data stored in an audio file having a higher priority is greater than or equal to the highest bit rate of object audio data stored in an audio file having a lower priority, are the combination 1 to the combination 4 illustrated in 43B.

Then, in step S1112, the segment file selection unit 213 determines an available transmission band. In step S1116, the segment file selection unit 213 selects a combination that can be transmitted at the highest bit rate on the basis of the available transmission band from the combinations output in step S1108, and the segment file acquisition unit 214 acquires the audio files of the combination from the server 100.

Thereafter, in a case where there is segment data at the next time (step S1120/No), the processing of steps S1104 to S1116 is continuously performed. In other words, since the priority changes over time, the segment file selection unit 213 continuously acquires the priorities of all the object audio data necessary for the reproduction at the next reproduction time from the metadata file acquired as needed, thereby appropriately responding to changes in priorities. In a case where there is no segment data at the next time (step S1120/Yes), in other words, in a case where the segment data are acquired up to the end of the content, a series of processing steps regarding the acquisition of the audio file ends. The segment data acquired in step S1116 is subjected to decoding processing, synthesis processing, and the like of the object audio data by the decoding processing unit 215 and the synthesis processing unit 216, whereby audio content is provided to the user.

Note that, the steps in the flowcharts of Figs. 40 and 42 do not necessarily have to be processed in chronological order in the described order. In other words, the steps in the flowcharts may be processed in an order different from the described order, or may be processed in parallel.

### <8. Hardware configuration example>

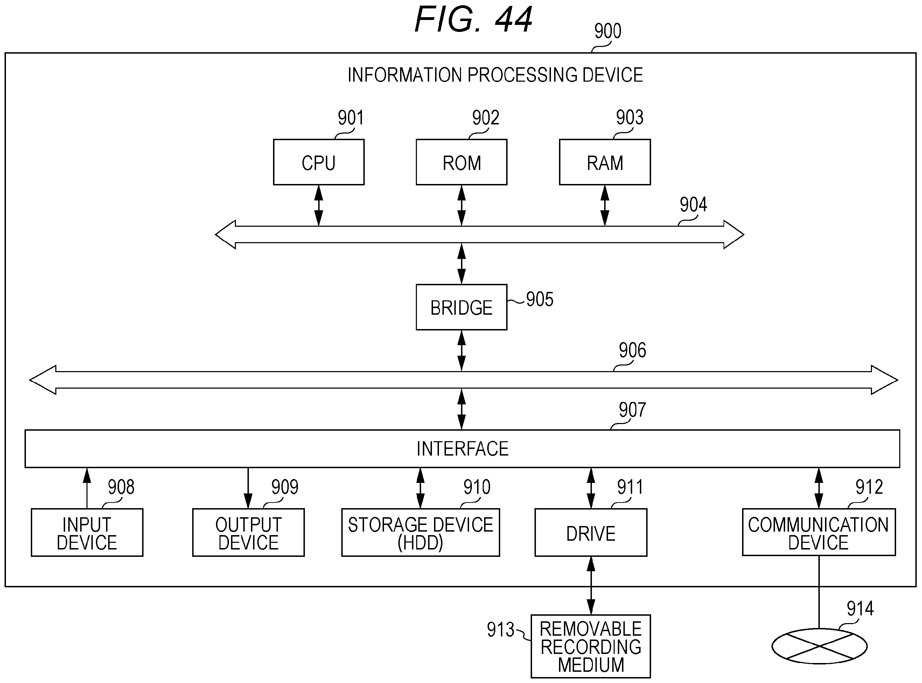

In the above description, the processing example of the client 200 has been described. Subsequently, with reference to Fig. 44, a hardware configuration example will be described of the server 100 or the client 200.

Fig. 44 is a block diagram illustrating a hardware configuration example of an information processing device 900 that embodies the server 100 or the client 200. The information processing device 900 includes a central processing unit (CPU) 901, a read only memory (ROM) 902, a random access memory (RAM) 903, a host bus 904, a bridge 905, an external bus 906, an interface 907, an input device 908, an output device 909, a storage device (HDD) 910, a drive 911, and a communication device 912.

The CPU 901 functions as an arithmetic processing device and a control device, and controls overall operation within the information processing device 900 in accordance with various programs. Furthermore, the CPU 901 may be a microprocessor. The ROM 902 stores programs, calculation parameters, and the like to be used by the CPU 901. The RAM 903 temporarily stores programs to be used in execution of the CPU 901, parameters and the like that change as appropriate in the execution. These are connected to each other by the host bus 904 including a CPU bus and the like. Functions of the processing unit 110 or the control unit 120 of the server 100 or the processing unit 210 or the control unit 220 of the client 200 are implemented by cooperation of the CPU 901, the ROM 902, and the RAM 903.

The host bus 904 is connected to the external bus 906 such as a peripheral component interconnect/interface (PCI) bus via the bridge 905. Note that, the host bus 904, the bridge 905, and the external bus 906 do not necessarily have to be configured separately, and these functions may be implemented on one bus.

The input device 908 includes input means for a user to input information, such as a mouse, keyboard, touch panel, button, microphone, switch, and lever, an input control circuit that generates an input signal on the basis of the input by the user and outputs the input signal to the CPU 901, and the like. The user who uses the information processing device 900 operates the input device 908, thereby being able to input various data and give an instruction to perform processing operation to each device.

The output device 909 includes, for example, display devices such as a cathode ray tube (CRT) display device, a liquid crystal display (LCD) device, an organic light emitting diode (OLED) device, and a lamp. Moreover, the output device 909 includes audio output devices such as a speaker and headphones. The output device 909 outputs reproduced content, for example. Specifically, the display device displays various types of information such as reproduced video data as text or images. On the other hand, the audio output device converts reproduced audio data or the like into audio and outputs it.

The storage device 910 is a device for storing data. The storage device 910 may include a storage medium, a recording device that records data on the storage medium, a reading device that reads data from the storage medium, a deletion device that deletes data recorded on the storage medium, and the like. The storage device 910 includes, for example, a hard disk drive (HDD). The storage device 910 drives a hard disk and stores programs executed by the CPU 901 and various data. The function of the storage unit 140 of the server 100 or the storage unit 240 of the client 200 is implemented by the storage device 910.

The drive 911 is a reader/writer for the storage medium, and is incorporated in the information processing device 900 or externally attached thereto. The drive 911 reads information recorded on a removable storage medium 913 such as a mounted magnetic disk, optical disk, magneto-optical disk, or semiconductor memory, and outputs the information to the RAM 903. Furthermore, the drive 911 can also write information on the removable storage medium 913.

The communication device 912 is, for example, a communication interface including a communication device and the like for connecting to the communications network 914. The function of the communication unit 130 of the server 100 or the communication unit 230 of the client 200 is implemented by the communication device 912.

In the above, the preferred embodiments of the present disclosure have been described in detail with reference to the accompanying drawings; however, the technical scope of the present disclosure is not limited to such examples. It is obvious that persons having ordinary knowledge in the technical field of the present disclosure can conceive various modification examples or correction examples within the scope of the technical idea described in the claims, and it is understood that the modification examples or correction examples also belong to the technical scope of the present disclosure.

Furthermore, the effects described in the present specification are merely illustrative or exemplary and not restrictive. That is, the technology according to the present disclosure can exhibit other effects obvious to those skilled in the art from the description of the present specification in addition to or in place of the above-described effects.

Note that, the following configurations also belong to the technical scope of the present disclosure.
(1) A transmission device including
   a transmission unit that transmits stream data whose priority has been set in units of object audio data.
(2) The transmission device according to (1), in which
   the stream data is data defined by MPEG-Dynamic Adaptive Streaming over Http (DASH).
(3) The transmission device according to (1) or (2), further including
   a processing unit that generates the stream data by including one or more pieces of the object audio data in an audio file on the basis of the priority.
(4) The transmission device according to (3), in which
   the processing unit sets another priority in units of the audio file on the basis of the priority.
(5) The transmission device according to (3) or (4), in which
   the processing unit includes information regarding the priority in either an MPD file for the stream data, or a metadata file including object metadata corresponding to the object audio data.
(6) The transmission device according to (5), in which
   in a case where the priority does not change over time, the processing unit includes the information regarding the priority in the MPD file.
(7) The transmission device according to (6), in which
   the processing unit includes the information regarding the priority in an adaptation set (AdaptationSet) of the MPD file.
(8) The transmission device according to (5), in which
   in a case where the priority changes over time, the processing unit includes the information regarding the priority in the metadata file.
(9) The transmission device according to (8), in which
   the processing unit associates the metadata file with the audio file by using the MPD file.
(10) The transmission device according to any one of (5) to (9), in which
   the processing unit includes information regarding a bit rate of the object audio data in the MPD file.
(11) The transmission device according to (10), in which
   the processing unit includes the information regarding the bit rate in the MPD file for each of the object audio data.
(12) The transmission device according to (10), in which
   the processing unit includes the information regarding the bit rate in the MPD file for each of the priorities.
(13) The transmission device according to (11) or (12), in which
   the processing unit includes, in the MPD file, a flag indicating whether the information regarding the bit rate is to be included in the MPD file for each of the object audio data or to be included in the MPD file for each of the priorities.
(14) The transmission device according to any one of (5) to (13), in which
   the processing unit includes description information of the object audio data in the MPD file.
(15) A transmission method executed by a computer, including
   transmitting stream data whose priority has been set in units of object audio data.
(16) A program for causing a computer to implement
   transmitting stream data whose priority has been set in units of object audio data.
(17) A reception device including
   a reception unit that receives stream data whose priority has been set in units of object audio data.
(18) The reception device according to (17), in which
   the stream data is data defined by MPEG-Dynamic Adaptive Streaming over Http (DASH).
(19) The reception device according to (17) or (18), further including
   a processing unit that performs reception processing of the stream data on the basis of information regarding the priority included in either an MPD file for the stream data, or a metadata file including object metadata corresponding to the object audio data.
(20) The reception device according to (19), in which
   in a case where the priority does not change over time, the processing unit performs the reception processing of the stream data on the basis of the information regarding the priority included in the MPD file.
(21) The reception device according to (19), in which
   in a case where the priority changes over time, the processing unit performs the reception processing of the stream data on the basis of the information regarding the priority included in the metadata file.
(22) The reception device according to any one of (19) to (21), in which
   the processing unit performs selection and the reception processing of the stream data on the basis of information regarding a bit rate of the object audio data included in the MPD file.
(23) The reception device according to any one of (19) to (22), in which
   the processing unit performs the selection and the reception processing of the stream data on the basis of description information of the object audio data included in the MPD file.
(24) A reception method executed by a computer, including
   receiving stream data whose priority has been set in units of object audio data.
(25) A program for causing a computer to implement
   receiving stream data whose priority has been set in units of object audio data.

Note that, the following configurations also belong to the technical scope of the present disclosure.
(1) An information processing device including
   a processing unit that generates an audio file including object audio data and object metadata, and a metadata file including the object metadata without including the object audio data.
(2) The information processing device according to (1), in which
   the metadata file includes object metadata included in each of a plurality of the audio files.
(3) The information processing device according to (1) or (2), in which
   the metadata file includes information regarding a priority set in units of the object audio data.
(4) The information processing device according to any one of (1) to (3), in which
   the metadata file and the audio file are files defined by MP4 (ISO/IEC Part 12 ISO Base Media File Format).
(5) The information processing device according to (4), in which
   the processing unit, when generating the metadata file, includes information used for specifying the audio file that the metadata file corresponds to in a Movie Box in the MP4.
(6) The information processing device according to (5), in which
   the processing unit includes the information used for specifying the audio file that the metadata file corresponds to in a Sample Description Box in the Movie Box.
(7) The information processing device according to (6), in which
   the processing unit includes the information used for specifying the audio file that the metadata file corresponds to in Sample Entry in the Sample Description Box.
(8) The information processing device according to any one of (5) to (7), in which
   the information used for specifying the audio file includes streamID, and
   the object metadata included in the metadata file is associated with the audio file by the streamID.
(9) The information processing device according to any one of (1) to (8), in which
   the object metadata and the object audio data are data defined by MPEG-H 3D Audio or AAC 3D Audio.
(10) The information processing device according to (9), in which
   in a case where the object metadata and the object audio data are data specified by the AAC 3D Audio,
   the processing unit, when generating the audio file, includes information indicating correspondence between a plurality of audio files including the audio file in the Movie Box in the MP4.
(11) An information processing method executed by a computer, including
   generating an audio file including object audio data and object metadata, and a metadata file including the object metadata without including the object audio data.
(12) A program for causing a computer to implement
   generating an audio file including object audio data and object metadata, and a metadata file including the object metadata without including the object audio data.
(13) An information processing device including
   a processing unit that performs reception processing on an audio file including object audio data and object metadata, and a metadata file including the object metadata without including the object audio data.
(14) The information processing device according to (13), in which
   the metadata file includes object metadata included in each of a plurality of the audio files.
(15) The information processing device according to (13) or (14), in which
   the metadata file includes information regarding a priority set in units of the object audio data.
(16) The information processing device according to any one of (13) to (15), in which
   the metadata file and the audio file are files defined by MP4 (ISO/IEC Part 12 ISO Base Media File Format).
(17) The information processing device according to (16), in which
   the processing unit, when performing the reception processing on the metadata file, specifies the audio file that the metadata file corresponds to by using information included in a Movie Box in the MP4.
(18) The information processing device according to (17), in which
   the processing unit specifies the audio file that the metadata file corresponds to by using information included in a Sample Description Box in the Movie Box.
(19) The information processing device according to (18), in which
   the processing unit specifies the audio file that the metadata file corresponds to by using information included in Sample Entry in the Sample Description Box.
(20) The information processing device according to any one of (17) to 19, in which
   the object metadata included in the metadata file is associated with the audio file by streamID.
(21) The information processing device according to any one of (13) to (20), in which
   the object metadata and the object audio data are data defined by MPEG-H 3D Audio or AAC 3D Audio.
(22) The information processing device according to (21), in which
   in a case where the object metadata and the object audio data are data specified by the AAC 3D Audio,
   the processing unit, when performing the reception processing on the audio file, recognizes correspondence between a plurality of audio files including the audio file by using information included in the Movie Box in the MP4.
(23) An information processing method executed by a computer, including
   performing reception processing on an audio file including object audio data and object metadata, and a metadata file including the object metadata without including the object audio data.
(24) A program for causing a computer to implement
   performing reception processing on an audio file including object audio data and object metadata, and a metadata file including the object metadata without including the object audio data.

Note that, the following configurations also belong to the technical scope of the present disclosure.
(1) An information processing device including
   a processing unit that
   sets a priority for each of object audio data acquired,
   determines the object audio data to be included in a segment file generated, from one or more pieces of the object audio data on the basis of the priority, and
   generates a new priority to be set for the segment file generated, as priority information, on the basis of the priority.
(2) The information processing device according to (1), in which
   the processing unit further generates a metadata file including object metadata encoded, corresponding to the object audio data, and
   the object metadata includes the priority information.
(3) The information processing device according to (1), in which
   in a case where the priority information does not change over time, the processing unit further generates an MPD file for the segment file, and includes the priority information in the MPD file.
(4) The information processing device according to (3), in which
   the processing unit includes the priority information in an adaptation set (AdaptationSet) of the MPD file.
(5) The information processing device according to (2), in which
   in a case where the priority information changes over time, the processing unit further generates an MPD file for the segment file and the metadata file.
(6) The information processing device according to (4) or (5), in which
   the processing unit includes information regarding a bit rate of the object audio data in the MPD file, for each of the object audio data.
(7) The information processing device according to (2), in which
   the processing unit stores information used for specifying the segment file in Sample Description Box of Movie Box of the metadata file.
(8) The information processing device according to (7), in which
   the processing unit stores the information used for specifying the segment file in Sample Entry in the Sample Description Box.
(9) The information processing device according to (8), in which
   the information used for specifying the segment file includes streamID for uniquely identifying the segment file.
(10) An information processing method executed by a computer, including
   performing information processing on stream data whose priority has been set for each of object audio data acquired.
(11) A program for causing a computer to implement
   performing information processing on stream data whose priority has been set for each of object audio data acquired.

### REFERENCE SIGNS LIST

- 100: Server
- 110: Processing unit
- 111: Data acquisition unit
- 112: Encoding processing unit
- 113: Segment file generation unit
- 114: MPD file generation unit
- 120: Control unit
- 130: Communication unit
- 140: Storage unit
- 200: Client
- 210: Processing unit
- 211: MPD file acquisition unit
- 212: MPD file processing unit
- 213: Segment file selection unit
- 214: Segment file acquisition unit
- 215: Decoding processing unit
- 216: Synthesis processing unit
- 220: Control unit
- 230: Communication unit
- 240: Storage unit
- 300: Internet

## Claims

1. An information processing device comprising
a processing unit that
sets a priority for each of object audio data acquired,
determines the object audio data to be included in a segment file generated, from one or more pieces of the object audio data on a basis of the priority, and
generates a new priority to be set for the segment file generated, as priority information, on a basis of the priority.

2. The information processing device according to claim 1, wherein
the processing unit further generates a metadata file including object metadata encoded, corresponding to the object audio data, and
the object metadata includes the priority information.

3. The information processing device according to claim 1, wherein
in a case where the priority information does not change over time, the processing unit further generates an MPD file for the segment file, and includes the priority information in the MPD file.

4. The information processing device according to claim 3, wherein
the processing unit includes the priority information in an adaptation set (AdaptationSet) of the MPD file.

5. The information processing device according to claim 2, wherein
in a case where the priority information changes over time, the processing unit further generates an MPD file for the segment file and the metadata file.

6. The information processing device according to claim 4 or 5, wherein
the processing unit includes information regarding a bit rate of the object audio data in the MPD file, for each of the object audio data.

7. The information processing device according to claim 2, wherein
the processing unit stores information used for specifying the segment file in Sample Description Box of Movie Box of the metadata file.

8. The information processing device according to claim 7, wherein
the processing unit stores the information used for specifying the segment file in Sample Entry in the Sample Description Box.

9. The information processing device according to claim 8, wherein
the information used for specifying the segment file includes streamID for uniquely identifying the segment file.

10. An information processing method executed by a computer, comprising
performing information processing on stream data whose priority has been set for each of object audio data acquired.

11. A program for causing a computer to implement
performing information processing on stream data whose priority has been set for each of object audio data acquired.
